(19) Europäisches Patentamt
European Patent Office
Office européen des brevets

(11) **EP 3 193 454 A1**

(12) **EUROPEAN PATENT APPLICATION**

(43) Date of publication:
**19.07.2017 Bulletin 2017/29**

(51) Int Cl.:
*H04B 1/12* (2006.01)   *G01R 23/20* (2006.01)
*H04B 17/00* (2015.01)   *H04B 1/10* (2006.01)
*H04W 88/08* (2009.01)   *H04W 24/08* (2009.01)

(21) Application number: **16202929.2**

(22) Date of filing: **08.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **18.01.2016 JP 2016007473**

(71) Applicant: **FUJITSU LIMITED
Kawasaki-shi Kanagawa 211-8588 (JP)**

(72) Inventors:
• **KAWASAKI, Toshio
Kawasaki-shi, Kanagawa 211-8588 (JP)**

• **AOKI, Nobuhisa
Kawasaki-shi, Kanagawa 211-8588 (JP)**
• **MANIWA, Toru
Kawasaki-shi, Kanagawa 211-8588 (JP)**
• **SATO, Tadahiro
Kawasaki-shi, Kanagawa 211-8588 (JP)**
• **TOBISU, Yusuke
Kawasaki-shi, Kanagawa 211-8588 (JP)**
• **TOWATA, Hiroshi
Fukuoka-shi, Fukuoka 814-8588 (JP)**

(74) Representative: **Cooper-Rolfe, Elizabeth Louise
Haseltine Lake LLP
Lincoln House, 5th Floor
300 High Holborn
London WC1V 7JH (GB)**

(54) **DELAY MEASURING INSTRUMENT, COMMUNICATION DEVICE, AND DELAY MEASURMENT METHOD**

(57) A delay measuring instrument (50) includes a generating unit and a calculating unit. The generating unit is, for example, a multiplier (500a) or a multiplier (500c). The calculating unit is, for example, a maximum value detecting unit (502a) or a maximum value detecting unit (502b). The generating unit generates an intermediate signal by multiplying one of transmission signals or the complex conjugate of the one of the transmission signals included in the plurality of transmission signals that are transmitted at different frequencies by a reception signal that includes therein an intermodulation signal generated by the plurality of the transmission signals. The calculating unit calculates, based on a correlation value between the intermediate signal and the other one of the transmission signals included in the plurality of the transmission signals, an amount of delay of the other one of the transmission signals with respect to the intermodulation signal.

FIG.5

"*" INDICATES COMPLEX CONJUGATE
OFFSET OF CARRIER WAVE FREQUENCY IS NOT
DEMONSTRATED

**Description**

FIELD

The embodiments discussed herein are related to a delay measuring instrument, a communication device, and a delay measurement method.

BACKGROUND

A plurality of wireless communication devices can perform communication by performing communication using different frequencies without interference from each other. Furthermore, in wireless communication devices using the frequency division duplex (FDD) method, because the frequency bands used for transmission signals are different from those used for reception signals, transmission and reception can be performed in parallel.

If a plurality of wireless communication devices performs communication by using transmission signals at different frequencies, intermodulation may sometimes occur in a plurality of transmission signals caused by the transmission signals being reflected to an obstacle, such as a metal signboard, or the like, and an intermodulation signal may sometimes be received by each of the wireless communication devices. The intermodulation signal may sometimes be included in the frequency band of the reception signal, depending on the arrangement of the frequencies of the transmission signals. If the frequency of the intermodulation signal is similar to the frequency of the reception signal, the intermodulation signal is not completely removed by a filter or the like, the quality of the reception signal is degraded in the wireless communication devices. Thus, studies have been conducted on a method of approximately reproducing the intermodulation signal from the transmission signals and canceling the intermodulation signal included in the reception signal by the reproduced intermodulation signal. Prior art example is disclosed in Japanese National Publication of International Patent Application No. 2009-526442 and in 3GPP TR37.808 v12.0.0 "Passive Intermodulation (PIM) handling for Base Stations (BS) (Release 12)"

However, the distance to the obstacle that is the generation source of the intermodulation signal generally differs for each wireless communication device. Thus, in the generation source of the intermodulation signal, the intermodulation signal is generated due to a plurality of transmission signals each having different amounts of delay. In contrast, each of the wireless communication devices reproduces the intermodulation signal from the plurality of the transmission signals regardless of the amount of delay of each of the transmission signals that have generated the actual intermodulation signal. Thus, even if the generated intermodulation signal is combined with the reception signal, it is difficult to sufficiently cancel the intermodulation signal that is included in the reception signal. Consequently, the quality of the reception signal is degraded due to the component of the intermodulation signal remaining the reception signal.

Accordingly, it is desirable in an embodiment of one aspect of the invention to provide a delay measuring instrument, a communication device, and a delay measurement method that can reduce the degradation of the quality of reception signals.

SUMMARY

According to an embodiment of an aspect, a delay measuring instrument includes a generating unit and a calculating unit. The generating unit generates an intermediate signal by multiplying one of transmission signals or complex conjugate of the one of the transmission signals that is included in a plurality of transmission signals that are transmitted at different frequencies by a reception signal that includes therein an intermodulation signal generated by the plurality of the transmission signals. The calculating unit calculates, based on a correlation value between the intermediate signal and other one of the transmission signals that is included in the plurality of the transmission signals, an amount of delay of the other one of the transmission signals with respect to the intermodulation signal.

BRIEF DESCRIPTION OF DRAWINGS

The invention is described, by way of example only, with reference to the following drawings, in which:

FIG. 1 is a block diagram illustrating an example of a communication device;
FIG. 2 is a schematic diagram illustrating the situation in which an intermodulation signal is generated;
FIG. 3 is a schematic diagram illustrating an example of the frequency of the intermodulation signal;
FIG. 4 is a block diagram illustrating an intermodulation signal (PIM) canceller according to a first embodiment;
FIG. 5 is a block diagram illustrating an example of a delay measuring instrument according to the first embodiment;
FIG. 6 is a schematic diagram illustrating an example of a correlator;

FIG. 7 is a schematic diagram illustrating an example of the correlator;

FIG. 8 is a flowchart illustrating an example of the operation of the delay measuring instrument according to the first embodiment;

FIG. 9 is a schematic diagram illustrating an example of a delay profile of each of transmission signals;

FIG. 10 is a schematic diagram illustrating an example of a delay profile of a generated intermodulation signal;

FIG. 11 is a block diagram illustrating an example of an intermodulation signal (PIM) canceller according to a comparative example;

FIG. 12 is a block diagram illustrating an example of a delay measuring instrument according to the comparative example;

FIG. 13 is a schematic diagram illustrating an example of a delay profile of an intermodulation signal generated in the comparative example;

FIG. 14 is a block diagram illustrating another example of a delay measuring instrument according to the comparative example;

FIG. 15 is a block diagram illustrating another example of a delay measuring instrument according to the first embodiment;

FIG. 16 is a schematic diagram illustrating an example of a delay profile of each of the transmission signals;

FIG. 17 is a block diagram illustrating an example of a delay measuring instrument according to a second embodiment;

FIG. 18 is a flowchart illustrating an example of the operation of the delay measuring instrument according to the second embodiment;

FIG. 19 is a schematic diagram illustrating an example of a delay profile of each of the transmission signals;

FIG. 20 is a block diagram illustrating another example of a delay measuring instrument according to the second embodiment;

FIG. 21 is a schematic diagram illustrating an example of a delay profile of each of the transmission signals;

FIG. 22 is a block diagram illustrating an example of a delay measuring instrument according to a third embodiment;

FIG. 23 is a flowchart illustrating an example of the operation of the delay measuring instrument according to the third embodiment;

FIG. 24 is a schematic diagram illustrating an example of a delay profile of each of the transmission signals;

FIG. 25 is a block diagram illustrating another example of a delay measuring instrument according to the third embodiment;

FIG. 26 is a schematic diagram illustrating an example of a delay profile of each of the transmission signals;

FIG. 27 is a block diagram illustrating an example of a delay measuring instrument according to a fourth embodiment;

FIG. 28 is a block diagram illustrating an example of a delay profile of each of the transmission signals;

FIG. 29 is a block diagram illustrating an example of a delay measuring instrument according to a fifth embodiment;

FIG. 30 is a schematic diagram illustrating an example of a delay profile of each of the transmission signals;

FIG. 31 is a block diagram illustrating another example of a delay measuring instrument according to the fifth embodiment;

FIG. 32 is a schematic diagram illustrating an example of a delay profile of each of the transmission signals;

FIG. 33 is a block diagram illustrating an example of a delay measuring instrument according to a sixth embodiment;

FIG. 34 is a block diagram illustrating an example of an average delay detecting unit;

FIG. 35 is a block diagram illustrating another example of a delay measuring instrument according to the sixth embodiment; and

FIG. 36 is a block diagram illustrating an example of hardware of a processing unit that implements the delay measuring instrument.

## DESCRIPTION OF EMBODIMENTS

Preferred embodiments of the present invention will be explained with reference to accompanying drawings. The delay measuring instrument, the communication device, and the delay measurement method disclosed in the present application are not limited to the embodiments described below. Furthermore, it is needless to say that each of the embodiments described below can be appropriately used in combination.

[a] First Embodiment

A communication device 10

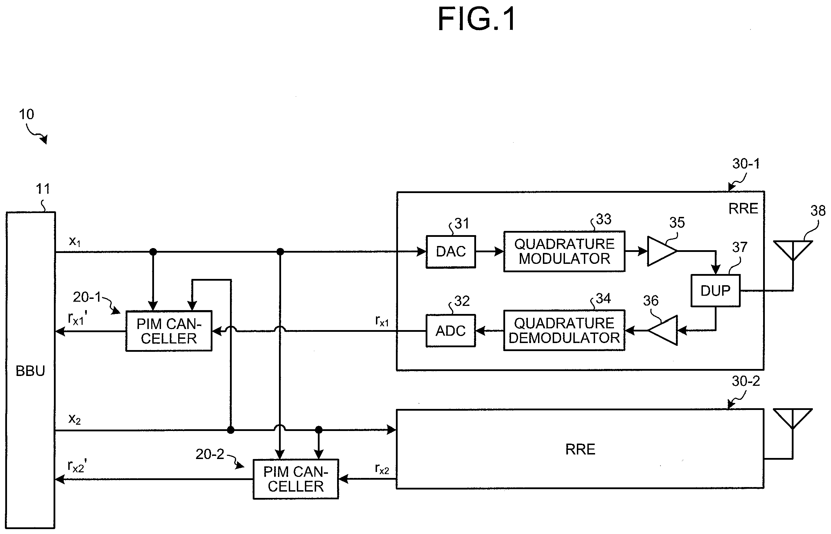

FIG. 1 is a block diagram illustrating an example of the communication device 10. The communication device 10 includes a base band unit (BBU) 11, a passive inter modulation (PIM) canceller 20-1, a PIM canceller 20-2, a remote radio equipment (RRE) 30-1, and an RRE 30-2. The RREs 30-1 and 30-2 transmit transmission signals by using different carrier wave frequencies. In the embodiment, the RRE 30-1 transmits a transmission signal $x_1$ by using a carrier wave frequency $f_1$, whereas the RRE 30-2 transmits a transmission signal $x_2$ by using a carrier wave frequency $f_2$. The transmission signal $x_1$ is an example of a first transmission signal, whereas the transmission signal $x_2$ is an example of a second transmission signal. Hereinafter, a description will be given with the assumption of $f_1 < f_2$. Furthermore, in a description below, if there is no need to distinguish between the PIM cancellers 20-1 and 20-2, the PIM cancellers 20-1 and 20-2 are simply referred to as the PIM canceller 20 and, if there is no need to distinguish between the RREs 30-1 and 30-2, the RREs 30-1 and 30-2 are simply referred to as the RRE 30.

Each of the RREs 30 includes a digital-to-analog converter (DAC) 31, an analog-to-digital converter (ADC) 32, a quadrature modulator 33, and a quadrature demodulator 34. Furthermore, each of the RREs 30 includes a power amplifier (PA) 35, a low noise amplifier (LNA) 36, a duplexer (DUP) 37, and an antenna 38.

The DAC 31 converts the transmission signal output from the BBU 11 from a digital signal to an analog signal and then outputs the converted signal to the quadrature modulator 33. The quadrature modulator 33 performs quadrature modulation on transmission baseband signal that is converted to the analog signal by the DAC 31. The PA 35 amplifies the transmission RF signal subjected to the quadrature modulation by the quadrature modulator 33. The DUP 37 passes, through the antenna 38, the frequency component of the transmission frequency band related to the transmission RF signals that are amplified by the PA 35. Consequently, the transmission RF signal is emitted from the antenna 38. The DAC 31, the quadrature modulator 33, and the PA 35 are an example of a transmission unit.

Furthermore, the DUP 37 passes, through the LNA 36, the frequency component of the reception frequency band related to the reception RF signal that is received via the antenna 38. The LNA 36 amplifies the reception RF signal output from the DUP 37. The quadrature demodulator 34 performs quadrature demodulation on the reception RF signal amplified by the LNA 36. The ADC 32 converts the reception signal subjected to quadrature demodulation by the quadrature demodulator 34 from the analog signal to the digital signal and then outputs, to the PIM canceller 20, the reception signal converted to the digital signal. The LNA 36, the quadrature demodulator 34, and the ADC 32 are an example of a receiving unit.

The PIM canceller 20-1 acquires, from the BBU 11, the transmission signal $x_1$ transmitted by the RRE 30-1 and the transmission signal $x_2$ transmitted by the RRE 30-2 and generates an intermodulation signal on the basis of the transmission signal $x_1$ and the transmission signal $x_2$. Then, the PIM canceller 20-1 cancels the generated intermodulation signal from the reception signal $r_{x1}$ that has been output form the RRE 30-1 and outputs, to the BBU 11, the reception signal $r_{x1}'$ in which the intermodulation signal has been cancelled.

The PIM canceller 20-2 acquires, from the BBU 11, the transmission signal $x_1$ transmitted by the RRE 30-1 and the transmission signal $x_2$ transmitted by the RRE 30-2 and generates an intermodulation signal on the basis of the transmission signal $x_1$ and the transmission signal $x_2$. Then, the PIM canceller 20-2 cancels the generated intermodulation signal from the reception signal $r_{x2}$ that has been output from the RRE 30-2 and outputs, to the BBU 11, the reception signal $r_{x2}'$ in which the intermodulation signal has been cancelled.

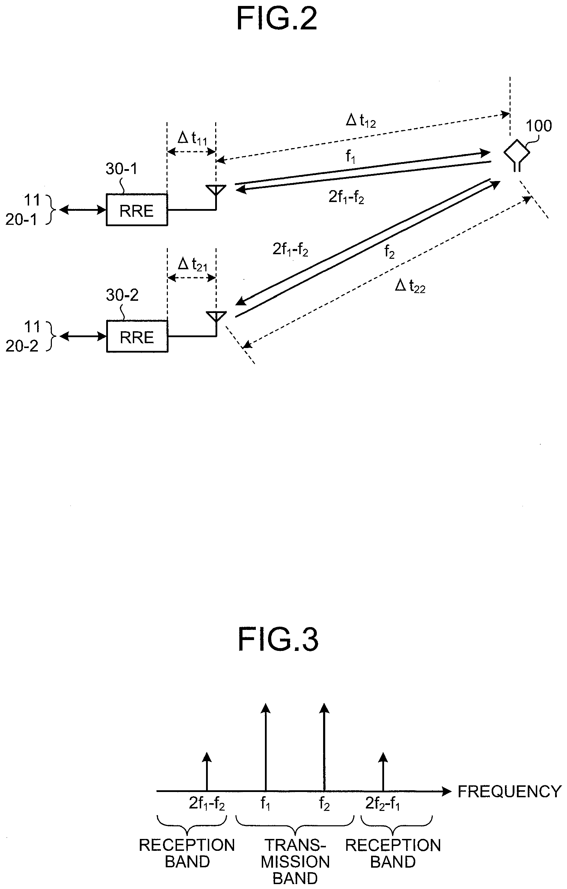

Here, situation in which an intermodulation signal is generated will be described. FIG. 2 is a schematic diagram illustrating the situation in which an intermodulation signal is generated. For example, as illustrated in FIG. 2, if an obstacle 100, such as a metal signboard, or the like, is present in the space, regarding the transmission RF signal transmitted at the frequency of $f_1$ from the RRE 30-1 and the transmission RF signal transmitted at the frequency of $f_2$ from the RRE 30-2, a signal having a distortion component is generated when the signal is reflected at the obstacle 100. An intermodulation distortion signal is included in the distortion component. A signal having a frequency of $2f_1 - f_2$ or $2f_2 - f_1$ is included in the intermodulation distortion signal generated from the transmission RF signal transmitted at the frequency $f_1$ and the transmission RF signal transmitted at the frequency $f_2$.

For example, as illustrated in FIG. 3, the frequency of $2f_1 - f_2$ or $2f_2 - f_1$ may sometimes be included in the reception band, depending on the frequencies of $_1$ and $f_2$. If the frequency of $2f_1 - f_2$ or $2f_2 - f_1$ is included in the reception frequency band, the quality of the reception signal in the reception band may sometimes be degraded. Consequently, the PIM canceller 20 improves the quality of the reception signal by canceling the intermodulation signal having the frequency of $2f_1 - f_2$ or $2f_2 - f_1$ included in the signal received by the RRE 30.

In order to cancel the intermodulation signal having the frequency of $2f_1 - f_2$ or $2f_2 - f_1$, for example, an intermodulation signal is generated from the transmission signal $x_1$ having the frequency of $f_1$ and the transmission signal $x_2$ having the frequency of $f_2$ and then the generated intermodulation signal is combined with the reception signal. Consequently, the intermodulation signal included in the reception signal is cancelled by the generated intermodulation signal and thus the quality of the reception signal is improved.

However, for example, as illustrated in FIG. 2, a delay $\Delta t_{11}$ caused by the length of a cable starting from a circuit included in the RRE 30-1 to the end of the antenna is generally different from a delay $\Delta t_{21}$ caused by the length of a cable starting from a circuit included in the RRE 30-2 to the end of the antenna. Furthermore, the distance from each of the RREs 30 to the obstacle 100 that is the generation source of the intermodulation signal is generally differs. Thus, a delay $\Delta t_{12}$ caused by the distance from the end of the antenna of the RRE 30-1 to the obstacle 100 is generally different from a delay $\Delta t_{22}$ caused by the distance from the end of the antenna of the RRE 30-2 to the obstacle 100.

Thus, at the obstacle 100, if an intermodulation signal is generated by the transmission RF signal having the frequency of $f_1$ and the transmission RF signal having the frequency of $f_2$, an amount of delay of the transmission signal $x_1$ is generally different from an amount of delay of the transmission signal $x_2$ that generate the subject intermodulation signal. If the amount of delay of the transmission signals $x_1$ and $x_2$ that have been used to generate the intermodulation signal is different from the amount of delay of the transmission signals $x_1$ and $x_2$ that have generated the intermodulation signal that is included in the reception signal, even if the generated intermodulation signal is combined with the reception signal, the intermodulation signal is not sufficiently cancelled.

Thus, in the embodiment, the amounts of delay of the transmission signals $x_1$ and $x_2$ that are used to generate an intermodulation signal are made to approach the amount of delay of the transmission signals $x_1$ and $x_2$ that have generated the received intermodulation signal. Consequently, the intermodulation signal included in the reception signal is sufficiently cancelled by the generated intermodulation signal and thus the quality of the reception signal is improved.

Furthermore, in below, a description will be given of canceling of the intermodulation signal having the frequency of $2f_1$-$f_2$; however, canceling of the intermodulation signal having the frequency of $2f_2$-$f_1$ can also be implemented by replacing $f_1$ with $f_2$.

The PIM canceller 20

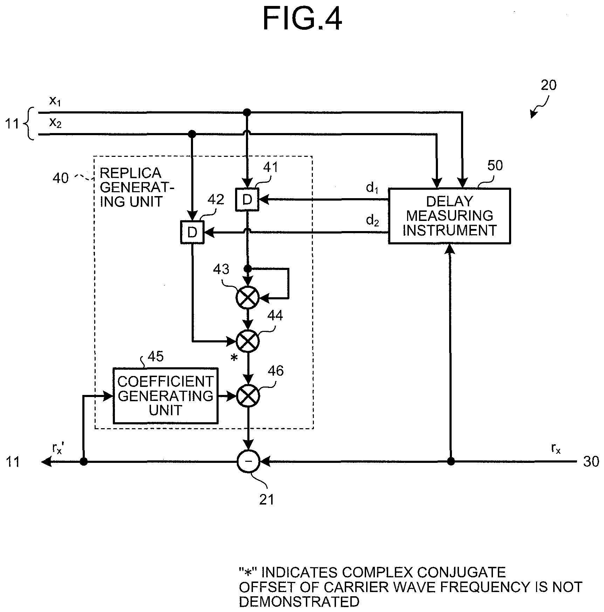

FIG. 4 is a block diagram illustrating an intermodulation signal (PIM) canceller 20 according to a first embodiment. The PIM canceller 20 includes a combining unit 21, a replica generating unit 40, and a delay measuring instrument 50. Furthermore, in FIG. 4 and the subsequent drawings, the symbol represented by "*" indicates the complex conjugate. Furthermore, in FIG. 4 and the subsequent block diagrams, offset of the carrier wave frequency is omitted.

On the basis of the transmission signals $x_1$ and $x_2$ output from the BBU 11 and the reception signal $r_x$ output from the RRE 30, the delay measuring instrument 50 measures an amount of delay $d_1$ of the transmission signal $x_1$ with respect to the reception signal $r_x$ and measures an amount of delay $d_2$ of the transmission signal $x_2$ with respect to the reception signal $r_x$. The replica generating unit 40 generates an intermodulation signal by using the transmission signal $x_1$ that is delayed by the amount of delay $d_1$ that is measured by the delay measuring instrument 50 and by using the transmission signal $x_2$ that is delayed by the amount of delay $d_2$ that is measured by the delay measuring instrument 50. The replica generating unit 40 is an example of a replica generating unit. The combining unit 21 cancels the intermodulation signal included in the reception signal $r_x$ by combining the reception signal $r_x$ output from the RRE 30 with the intermodulation signal generated by the replica generating unit 40. Then, the combining unit 21 outputs the reception signal $r_x'$ in which the intermodulation signal has been canceled to the BBU 11.

The replica generating unit 40 includes a delay setting unit 41, a delay setting unit 42, a multiplier 43, a multiplier 44, a coefficient generating unit 45, and a multiplier 46. The multiplier 43, the multiplier 44, and the multiplier 46 are, for example, complex multipliers. The transmission signal $x_1$ output from the BBU 11 is delayed by the amount of delay $d_1$ by the delay setting unit 41 and is squared by the multiplier 43. Furthermore, the transmission signal $x_2$ output from the BBU 11 is delayed by the amount of delay $d_2$ by the delay setting unit 42. Then, the multiplier 44 generates an intermodulation signal by multiplying the transmission signal $x_1$ squared by the multiplier 43 by the complex conjugate of the transmission signal $x_2$ that has been delayed by the delay setting unit 42.

The coefficient generating unit 45 detects the component of the intermodulation signal that is included in the reception signal $r_x'$ output from the combining unit 21. Then, the coefficient generating unit 45 calculates a coefficient that is used to adjust the amplitude and the phase of the intermodulation signal generated by the multiplier 44 such that the component of the detected intermodulation signal is canceled. The multiplier 46 adjusts the amplitude and the phase of the intermodulation signal generated by the multiplier 44 by multiplying the coefficient that is calculated by the coefficient generating unit 45 by the intermodulation signal that is generated by the multiplier 44. The intermodulation signal with the amplitude and the phase adjusted by the multiplier 46 is output to the combining unit 21.

Here, for example, as described with reference to FIG. 2, an intermodulation signal $S_{PIM}$ having the frequency of $2f_1$-$f_2$ is included in the reception signal $r_x$. The intermodulation signal $S_{PIM}$ is represented by, for example, Equation (1) below. Note that the offset frequency of carrier wave is omitted.

$$S_{PIM} = A_3(x_1^2 \cdot x_2^*) + A_{51}(|x_1|^2 \cdot x_1^2 \cdot x_2^*) + A_{52}(|x_2|^2 \cdot x_1^2 \cdot x_2^*) + \ldots$$

$$= (A_3 + A_{51}|x_1|^2 + A_{52}|x_2|^2 + \ldots)x_1^2 \cdot x_2^* \tag{1}$$

In Equation (1) above, $A_3$, $A_{51}$, and $A_{52}$, ... are constants each representing the coefficient of nonlinear distortion. Furthermore, in Equation (1) above, $x^*$ represents the complex conjugate of the transmission signal $x$.

If the transmission signal $x_2$ is multiplied by the intermodulation signal $S_{PIM}$ represented by Equation (1) above,

an intermediate signal $S_{m1}$ that is the multiplication result is represented by, for example, Equation (2) below. The intermediate signal $S_{m1}$ is an example of a first intermediate signal.

$$S_{m1}=S_{PIM}\cdot x_2$$

$$=(A_3+A_{51}|x_1|^2+A_{52}|x_2|^2+...)x_1^2\cdot x_2^*\cdot x_2$$

$$=(A_3+A_{51}|x_1|^2+A_{52}|x_2|^2+...)|x_2|^2\cdot x_1^2 \qquad\qquad (2)$$

In Equation (2) above, the component of the transmission signal $x_2$ is a real number and is the variation in the amplitude component. Thus, it is possible to take a correlation between the intermediate signal $S_{m1}$ represented by Equation (2) above and the square of the transmission signal $x_1$. The correlation value between the intermediate signal $S_{m1}$ and the square of the transmission signal $x_1$ is calculated with respect to the intermediate signal $S_{m1}$ represented by Equation (2) above while changing the amount of delay of the transmission signal $x_1$. Then, the amount of delay having the maximum correlation value is the amount of delay $d_1$ of the transmission signal $x_1$ that has generated the intermodulation signal $S_{PIM}$.

Furthermore, if the complex conjugate of the square of the transmission signal $x_1$ is multiplied by the intermodulation signal $S_{PIM}$ represented by Equation (1) above, the intermediate signal $S_{m2}$ that is the multiplication result is represented by, for example, Equation (3) below. The intermediate signal $S_{m2}$ is an example of a second intermediate signal.

$$S_{m2}=S_{PIM}\cdot(x_1^2)^*$$

$$=(A_3+A_{51}|x_1|^2+A_{52}|x_2|^2+...)x_1^2\cdot x_2^*\cdot(x_1^2)^*$$

$$=(A_3+A_{51}|x_1|^2+A_{52}|x_2|^2+...)|x_1|^4\cdot x_2^* \qquad\qquad (3)$$

In Equation (3) above, the component of the transmission signal $x_1$ is the real number and is variation in the amplitude component. Thus, it is possible to take a correlation between the intermediate signal $S_{m2}$ represented by Equation (3) above and the complex conjugate of the transmission signal $x_2$. The correlation value between the intermediate signal $S_{m2}$ and the complex conjugate of the transmission signal $x_2$ is calculated with respect to the intermediate signal $S_{m2}$ represented by Equation (3) above while changing the amount of delay of the transmission signal $x_2$. Then, the amount of delay having the maximum correlation value is the amount of delay $d_2$ of the transmission signal $x_2$ that has generated the intermodulation signal $S_{PIM}$.

In this way, by taking a correlation between the multiplication result and the transmission signal after multiplying the transmission signal by the reception signal that includes therein the intermodulation signal, it is possible to separately obtain a delay of each of the transmission signals. The process of obtaining a delay of each of the transmission signals is implemented by the delay measuring instrument 50. In the following, an example of a specific processing block of the delay measuring instrument 50 will be described.

The delay measuring instrument 50

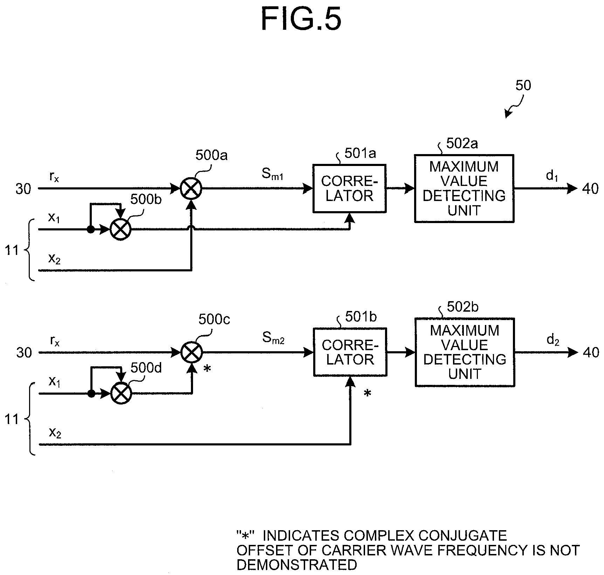

FIG. 5 is a block diagram illustrating an example of the delay measuring instrument 50 according to the first embodiment. The delay measuring instrument 50 according to the embodiment includes a plurality of multipliers 500a to 500d, a plurality of correlators 501a and 501b, and a plurality of maximum value detecting units 502a and 502b. The multipliers 500a to 500d are, for example, complex multipliers. The multipliers 500a and 500c are an example of the generating unit. Furthermore, the maximum value detecting units 502a and 502b are an example of a calculating unit.

The multiplier 500a calculates the intermediate signal $S_{m1}$ by multiplying the reception signal $r_x$ output from the RRE 30 by the transmission signal $x_2$ output from the BBU 11. The multiplier 500a is an example of a first generating unit. The multiplier 500b calculates the square of the transmission signal $x_1$ output from the BBU 11.

While shifting the amount of delay of the square of the transmission signal $x_1$ calculated by the multiplier 500b, the correlator 501a calculates the correlation value between the intermediate signal $S_{m1}$ calculated by the multiplier 500a and the transmission signal $x_1$ calculated by the multiplier 500b.

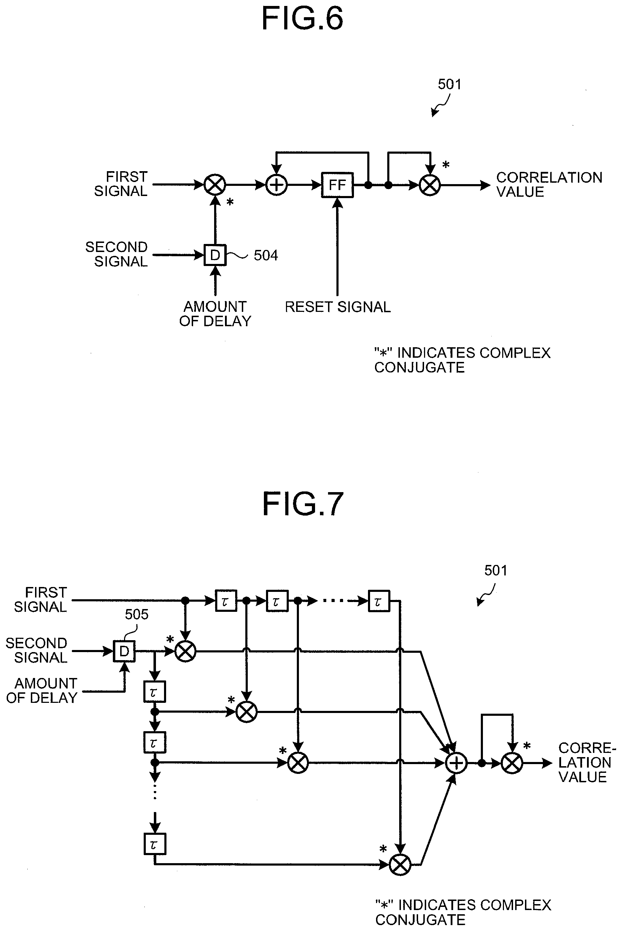

For example, a sliding correlator illustrated in FIG. 6 can be used for the correlator 501a. FIG. 6 is a schematic diagram illustrating an example of a correlator 501. The intermediate signal $S_{m1}$ calculated by the multiplier 500a is input, as a first signal, to the correlator 501 illustrated in FIG. 6 and the square of the transmission signal $x_1$ calculated by the multiplier 500b is input, as a second signal, to the correlator 501 illustrated in FIG. 6. Then, the correlation value between the first signal and the second signal is calculated for each amount of delay that is set by a delay setting unit 504.

Furthermore, for example, a matched filter illustrated in FIG. 7 may also be used as the correlator 501a. FIG. 7 is a schematic diagram illustrating an example of the correlator 501. The intermediate signal $S_{m1}$ calculated by the multiplier 500a is input, as the first signal, to the correlator 501 illustrated in FIG. 7 and the square of the transmission signal $x_1$ calculated by the multiplier 500b is input, as the second signal, to the correlator 501 illustrated in FIG. 7. Then, the correlation value between the first signal and the second signal is calculated for each amount of delay that is set by a delay setting unit 505.

The maximum value detecting unit 502a detects the maximum correlation value from among the correlation values calculated by the correlator 501a. Then, the maximum value detecting unit 502a outputs the amount of delay having the detected maximum correlation value to the replica generating unit 40 as the amount of delay $d_1$ of the transmission signal $x_1$. The maximum value detecting unit 502a is an example of a first calculating unit.

Furthermore, the multiplier 500d calculates the square of the transmission signal $x_1$ output from the BBU 11. The multiplier 500c calculates the intermediate signal $S_{m2}$ by multiplying the reception signal $r_x$ output from the RRE 30 by the complex conjugate of the square of the transmission signal $x_1$ calculated by the multiplier 500d. The multiplier 500c is an example of a second generating unit.

While shifting the amount of delay of the complex conjugate of the transmission signal $x_2$, the correlator 501b calculates the correlation value between the intermediate signal $S_{m2}$ calculated by the multiplier 500c and the complex conjugate of the transmission signal $x_2$. For example, the sliding correlator illustrated in FIG. 6, the matched filter illustrated in FIG. 7, or the like can be used as the correlator 501b.

The maximum value detecting unit 502b detects the maximum correlation value from among the correlation values calculated by the correlator 501b. Then, the maximum value detecting unit 502b outputs the amount of delay of the detected maximum correlation value to the replica generating unit 40 as the amount of delay $d_2$ of the transmission signal $x_2$. The maximum value detecting unit 502b is an example of a second calculating unit.

Operation of the delay measuring instrument 50

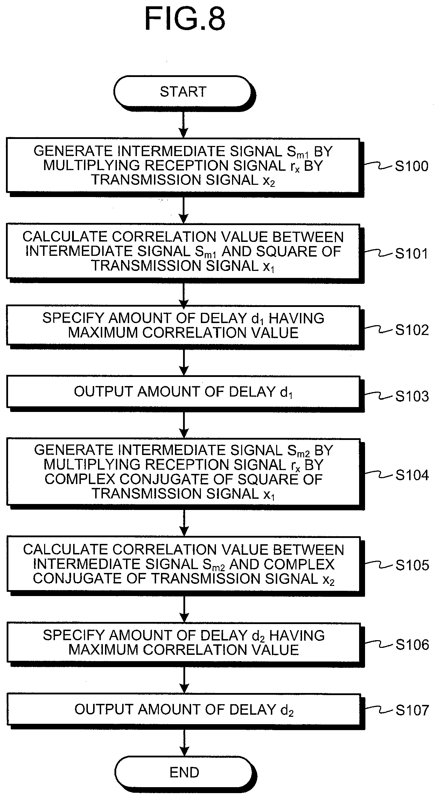

FIG. 8 is a flowchart illustrating an example of the operation of the delay measuring instrument 50 according to the first embodiment. The delay measuring instrument 50 starts the operation illustrated in FIG. 8 at a predetermined timing.

First, the multiplier 500a generates the intermediate signal $S_{m1}$ by multiplying the reception signal $r_x$ output from the RRE 30 by the transmission signal $x_2$ output from the BBU 11 (Step S100). Then, the correlator 501a calculates the correlation value between the intermediate signal $S_{m1}$ and the square of the transmission signal $x_1$ while shifting the amount of delay of the square of the transmission signal $x_1$ calculated by the multiplier 500b (Step S101).

Then, the maximum value detecting unit 502a detects the maximum correlation value from among the correlation values calculated by the correlator 501a. Then, the maximum value detecting unit 502a specifies the amount of delay $d_1$ having the detected maximum correlation value (Step S102). Then, the maximum value detecting unit 502a outputs the amount of delay $d_1$ to the replica generating unit 40 (Step S103).

Then, the multiplier 500d calculates the square of the transmission signal $x_1$ output from the BBU 11. Then, the multiplier 500c calculates the intermediate signal $S_{m2}$ by multiplying the reception signal $r_x$ output from the RRE 30 by the complex conjugate of the square of the transmission signal $x_1$ calculated by the multiplier 500d (Step S104).

Then, the correlator 501b calculates the correlation value between the intermediate signal $S_{m2}$ and the complex conjugate of the transmission signal $x_2$ while shifting the amount of delay of the complex conjugate of the transmission signal $x_2$ (Step S105). Then, the maximum value detecting unit 502b detects the maximum correlation value from among the correlation values calculated by the correlator 501b. Then, the maximum value detecting unit 502b specifies the amount of delay $d_2$ having the detected maximum correlation value (Step S106). Then, the maximum value detecting unit 502b outputs the amount of delay $d_2$ to the replica generating unit 40 (S107).

In the flowchart illustrated in FIG. 8, the processes at Steps S104 to S107 are performed after the processes at Steps S100 to S103 have been performed; however, either of the processes at Steps S100 to S103 and the processes at Steps S104 to S107 may also be performed first. Furthermore, both the processes at Steps S100 to S103 and the processes at Steps S104 to S107 may also be performed in parallel.

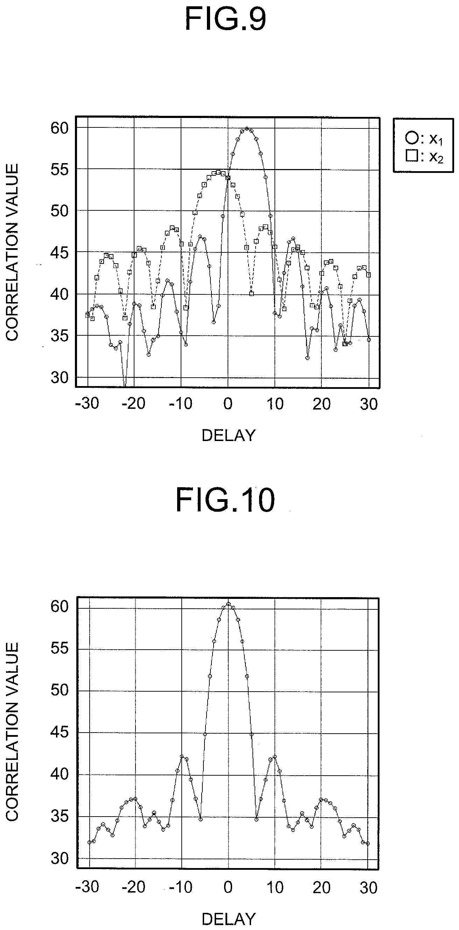

The delay profile calculated for each transmission signal by the delay measuring instrument 50 is like that illustrated in, for example, FIG. 9. FIG. 9 is a schematic diagram illustrating an example of the delay profile of each of the transmission signals. In FIG. 9, the horizontal axis indicates the amount of delay of each of the transmission signals with respect to the intermodulation signal, whereas the vertical axis indicates the correlation values. Furthermore, in FIG. 9, each of the white dots indicates the correlation value between intermediate signal $S_{m1}$ and the square of the

transmission signal $x_1$, whereas each of the white squares indicates the correlation value between the intermediate signal $S_{m2}$ and the complex conjugate of the transmission signal $x_2$. Furthermore, FIG. 9 illustrates each of the correlation values with the reception signal that includes therein the intermodulation signal generated by the transmission signal $x_1$ having the amount of delay of +4 samples and the transmission signal $x_2$ having the amount of delay of -2 samples.

The maximum value of the delay profile illustrated in FIG. 9 is detected as the amount of delay of each of the transmission signals with respect to the intermodulation signal. In the example illustrated in FIG. 9, regarding the transmission signal $x_1$, the correlation value becomes the maximum at the position of +4 samples with respect to the intermodulation signal, whereas, regarding the transmission signal $x_2$, the correlation value becomes the maximum at the position of -2 samples with respect to the intermodulation signal. In this way, by taking a correlation between the multiplication result and the transmission signal after multiplying the transmission signal by the reception signal that includes therein the intermodulation signal, the delay of each of the transmission signals can separately be obtained.

Consequently, it is possible to generate an intermodulation signal on the basis of the transmission signal having the amount of delay similar to that of each of the transmission signals that have generated the intermodulation signal. Consequently, the replica generating unit 40 can generate the intermodulation signal having the waveform similar to that of the intermodulation signal that is included in the reception signal. Consequently, when taking a correlation between the generated intermodulation signal and the reception signal, the delay profile indicates that, for example, as illustrated in FIG. 10, the correlation value becomes the maximum at the timing of synchronization with the intermodulation signal that is included in the reception signal. Consequently, it is possible to accurately match the timing between the generated intermodulation signal and the intermodulation signal that is included in the reception signal and thus it is possible to accurately cancel the intermodulation signal included in the reception signal.

Comparative example

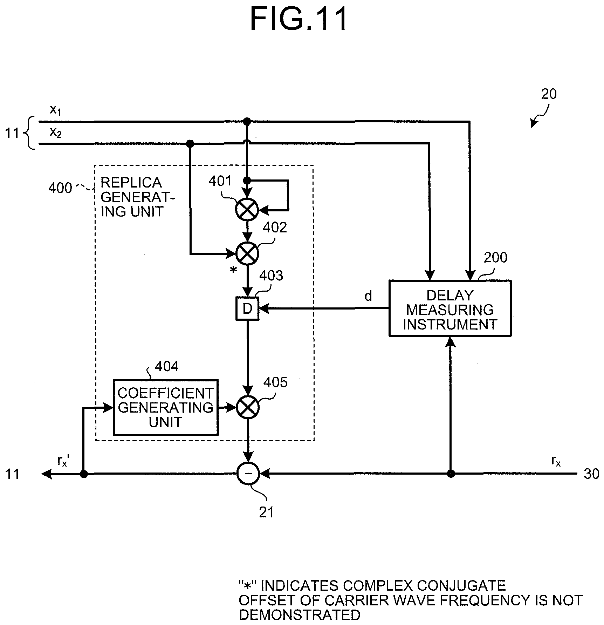

Here, the comparative example will be described. FIG. 11 is a block diagram illustrating an example of the PIM canceller 20 according to the comparative example. The PIM canceller 20 according to the comparative example includes the combining unit 21, a delay measuring instrument 200, and a replica generating unit 400. The delay measuring instrument 200 generates an intermodulation signal on the basis of the transmission signals $x_1$ and $x_2$ output from the BBU 11 and measures the amount of delay d of the intermodulation signal on the basis of the correlation between the generated signal and the reception signal $r_x$ output from the RRE 30.

The replica generating unit 400 includes a multiplier 401, a multiplier 402, a delay setting unit 403, a coefficient generating unit 404, and a multiplier 405. The multiplier 401 calculates the square of the transmission signal $x_1$ output from the BBU 11. The multiplier 402 generates an intermodulation signal by multiplying the square of the transmission signal $x_1$ calculated by the multiplier 401 by the complex conjugate of the transmission signal $x_2$ output from the BBU 11.

The delay setting unit 403 delays the intermodulation signal generated by the multiplier 402 by the amount of delay d measured by the delay measuring instrument 200. The coefficient generating unit 404 calculates the coefficient that is used to adjust the amplitude and the phase of the intermodulation signal delayed by the delay setting unit 403 such that the component of the intermodulation signal included in the reception signal output from the combining unit 21 is canceled. The multiplier 405 adjusts the amplitude and the phase of the generated intermodulation signal by multiplying the coefficient calculated by the coefficient generating unit 404 by the intermodulation signal that is delayed by the delay setting unit 403.

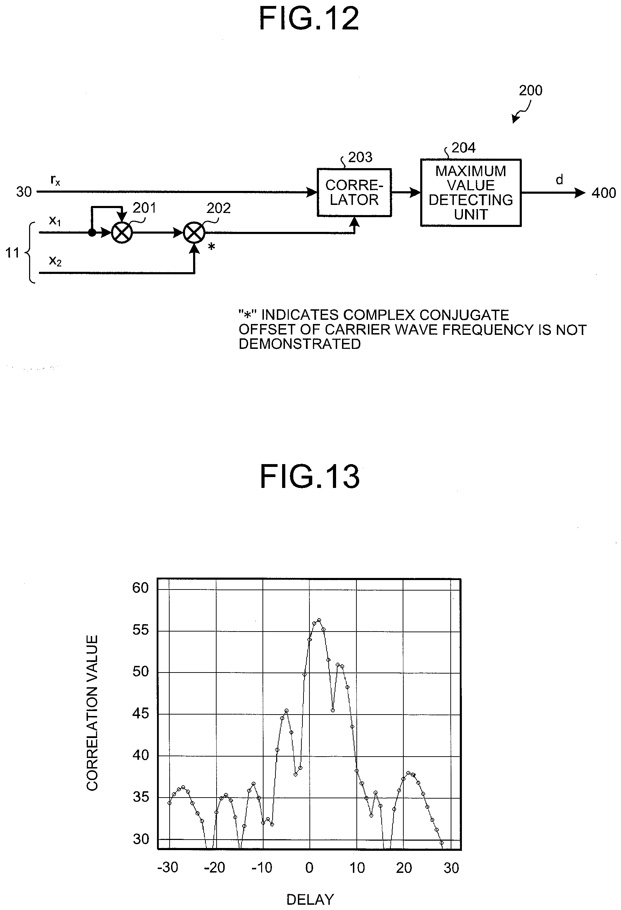

FIG. 12 is a block diagram illustrating an example of the delay measuring instrument 200 according to the comparative example. The delay measuring instrument 200 according to the comparative example includes a multiplier 201, a multiplier 202, a correlator 203, and a maximum value detecting unit 204. The multiplier 201 calculates the square of the transmission signal $x_1$ output from the BBU 11. The multiplier 202 generates the intermodulation signal by multiplying the square of the transmission signal $x_1$ calculated by the multiplier 201 by the complex conjugate of the transmission signal $x_2$ output from the BBU 11.

The correlator 203 calculates the correlation value between the reception signal rx output from the RRE 30 and the intermodulation signal generated by the multiplier 202 while shifting the amount of delay of the intermodulation signal generated by the multiplier 202. The maximum value detecting unit 204 detects the maximum correlation value from among the correlation values calculated by the correlator 203. Then, the maximum value detecting unit 204 outputs the amount of delay of the detected maximum correlation value to the replica generating unit 400 as the amount of delay d of the intermodulation signal.

In the comparative example, the amount of delay of each of the transmission signals that have generated the intermodulation signal is not considered. Thus, the intermodulation signal generated in the comparative example has a waveform different from that of the intermodulation signal included in the reception signal. Thus, when taking a correlation between the intermodulation signal and the reception signal generated in the comparative example, for example, the result is like that illustrated in FIG. 13. FIG. 13 is a schematic diagram illustrating an example of the delay profile of the intermodulation signal generated in the comparative example. In FIG. 13, the horizontal axis indicates the amount of delay of each of the intermodulation signals generated with respect to the intermodulation signals included in the reception signals. Furthermore, in FIG. 13, the vertical axis indicates the correlation values between the reception signals and the generated intermodulation signals.

In the comparative example, the amount of delay of each of the transmission signals that have generated the intermodulation signal included in the reception signal is different from the amount of delay of each of the transmission signals used to generate the intermodulation signal. Thus, the correlation value between the reception signal and the generated intermodulation signal becomes the maximum at the amount of delay that is different from the amount of delay of zero. Thus, it is difficult to combine the generated intermodulation signal by matching the timing of the intermodulation signal that is included in the reception signal and thus it is difficult to sufficiently cancel the intermodulation signal that is included in the reception signal.

Furthermore, in the comparative example, because the amount of delay of each of the transmission signals that generate the intermodulation signal included in the reception signal is different from the amount of delay of each of the transmission signals that are used to generate the intermodulation signal, the generated intermodulation signal has a waveform different from that of the intermodulation signal included in the reception signal. Thus, even if the generated intermodulation signal is combined by matching the timing of the intermodulation signal included in the reception signal, it is difficult to cancel the intermodulation signal included in the reception signal sufficiently.

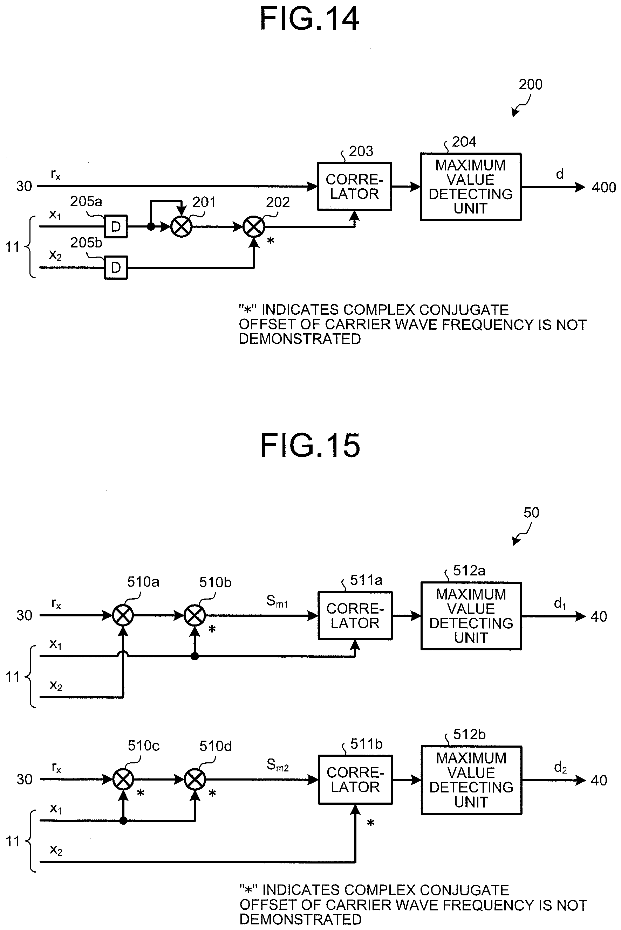

Here, for example, as illustrated in FIG. 14, it is conceivable to separately adjust the amount of delay of the transmission signals $x_1$ and $x_2$ by using a delay setting unit 205a and a delay setting unit 205b. In the example illustrated in FIG. 14, the combination of the amounts of delay in a case in which the correlation value becomes the maximum while changing the amount of delay that is set in the delay setting unit 205a and the delay setting unit 205b. Consequently, the amount of delay of each of the transmission signals that are used to generate the intermodulation signal can be made to approach the amount of delay of each of the transmission signals that have generated the intermodulation signal included in the reception signal.

However, in the example illustrated in FIG. 14, if the number of amounts of delay that are set to the transmission signals $x_1$ and $x_2$ is, for example, 100 combinations, correlation values are calculated by the correlator 203 with respect to 10,000 combinations of the amount of delay. Thus, with the delay measuring instrument 200 according to the comparative example illustrated in FIG. 14, there is a problem in that the processing load is increased.

In contrast, with the delay measuring instrument 50 according to the embodiment illustrated in FIG. 5, regarding the transmission signals $x_1$ and $x_2$, if a correlation value is calculated once by using the correlators 501a and 501b, it is possible to calculate each of the amounts of delay of the transmission signals $x_1$ and $x_2$. Thus, the delay measuring instrument 50 according to the embodiment can calculate each of the amounts of delay of the transmission signals $x_1$ and $x_2$ while reducing an increase in processing load. Consequently, the PIM canceller 20 according to the embodiment can generate the intermodulation signal having the waveform similar to that of the intermodulation signal that is included in the reception signal and can accurately cancel the intermodulation signal included in the reception signal.

Another example of the delay measuring instrument 50 according to the first embodiment

Furthermore, in the first embodiment described above, when measuring the amount of delay of the transmission signal $x_1$, the transmission signal $x_2$ is multiplied by the reception signal; however, the disclosed technology is not limited to this. For example, it may also be possible to multiply both the complex conjugate of the transmission signal $x_1$ and the transmission signal $x_2$ by the intermodulation signal $S_{PIM}$ represented by Equation (1) above. If both the complex conjugate of the transmission signal $x_1$ and the transmission signal $x_2$ is multiplied by the intermodulation signal $S_{PIM}$, the intermediate signal $S_{m1}$ that is the multiplication result is represented by, for example, Equation (4) below.

$$S_{m1} = S_{PIM} \cdot x_1{}^* \cdot x_2$$

$$= (A_3 + A_{51}|x_1|^2 + A_{52}|x_2|^2 + \ldots) x_1{}^2 \cdot x_2{}^* \cdot x_1{}^* \cdot x_2$$

$$= (A_3 + A_{51}|x_1|^2 + A_{52}|x_2|^2 + \ldots) |x_2|^2 \cdot |x_1|^2 \cdot x_1 \qquad\qquad (4)$$

In Equation (4) above, because the component of the transmission signal $x_1$ remains, it is possible to take a correlation between the intermediate signal $S_{m1}$ and the transmission signal $x_1$. The delay measuring instrument 50 that implements Equation (4) above is represented by, for example, the diagram illustrated in FIG. 15. FIG. 15 is a block diagram illustrating another example of the delay measuring instrument 50 according to the first embodiment. Furthermore, the delay measuring instrument 50 illustrated in FIG. 15 also differs from the delay measuring instrument 50 illustrated in FIG. 5 in that, when calculating the amount of delay $d_2$ of the transmission signal $x_2$, the intermediate signal

$S_{m2}$ is calculated by multiplying the complex conjugate of the transmission signal $x_1$ by the reception signal $r_x$ twice.

The delay measuring instrument 50 illustrated in FIG. 15 includes a plurality of multipliers 510a to 510d, a plurality of correlators 511a and 511b, and a plurality of maximum value detecting units 512a and 512b. The multipliers 510a to 510d are, for example, complex multipliers. For example, sliding correlator illustrated in FIG. 6, the matched filter illustrated in FIG. 7, or the like can be used for the correlators 511a and 511b.

The multiplier 510a multiplies the reception signal $r_x$ output from the RRE 30 by the transmission signal $x_2$ output from the BBU 11. The multiplier 510b calculates the intermediate signal $S_{m1}$ by multiplying the complex conjugate of the transmission signal $x_1$ by the multiplication result obtained by the multiplier 510a.

The correlator 511a calculates the correlation value between the transmission signal $x_1$ and the intermediate signal $S_{m1}$ calculated by the multiplier 510b while shifting the amount of delay of the transmission signal $x_1$ output from the BBU 11. The maximum value detecting unit 512a detects the maximum correlation value from among the correlation values calculated by the correlator 511a. Then, the maximum value detecting unit 512a outputs the amount of delay of the detected maximum correlation value to the replica generating unit 40 as the amount of delay $d_1$ of the transmission signal $x_1$.

Furthermore, the multiplier 510c multiplies the reception signal $r_x$ output from the RRE 30 by the complex conjugate of the transmission signal $x_1$ output from the BBU 11. The multiplier 510d calculates the intermediate signal $S_{m2}$ by multiplying the multiplication result obtained by the multiplier 510c by the complex conjugate of the transmission signal $x_1$ output from the BBU 11.

The correlator 511b calculates the correlation value between the intermediate signal $S_{m2}$ calculated by the multiplier 510d while shifting the amount of delay of the complex conjugate of the transmission signal $x_2$ and the complex conjugate of the transmission signal $x_2$. The maximum value detecting unit 512b detects the maximum correlation value from among the correlation values calculated by the correlator 511b. Then, the maximum value detecting unit 512b outputs the amount of delay of the detected maximum correlation value to the replica generating unit 40 as the amount of delay $d_2$ of the transmission signal $x_2$.

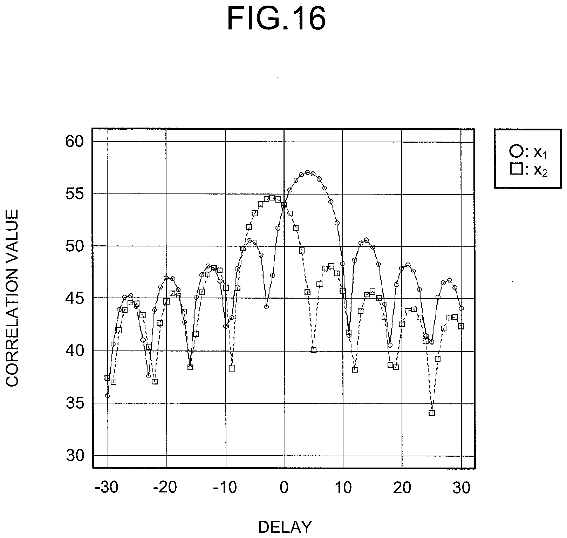

The delay profile calculated about each of the transmission signals by the delay measuring instrument 50 illustrated in FIG. 15 is like that illustrated in, for example, FIG. 16. FIG. 16 is a schematic diagram illustrating an example of the delay profile of each of the transmission signals. In FIG. 16, the horizontal axis indicates the amount of delay of each of the transmission signals with respect to the intermodulation signal, whereas the vertical axis indicates the correlation values. Furthermore, in FIG. 16, each of the white dots indicates the correlation value between the intermediate signal $S_{m1}$ and the transmission signal $x_1$, whereas each of the white squares indicates the correlation values between the intermediate signal $S_{m2}$ and the complex conjugate of the transmission signal $x_2$. Furthermore, FIG. 16 illustrates each of the correlation values with the reception signal that includes therein the intermodulation signal generated by the transmission signal $x_1$ having the amount of delay of +4 samples and the transmission signal $x_2$ having the amount of delay of -2 samples.

Effect of the first embodiment

In the above, the first embodiment has been described. The delay measuring instrument 50 according to the embodiment generates an intermediate signal by multiplying one of the transmission signals or the complex conjugate of the one of the transmission signals that are transmitted at different frequencies by a reception signal that includes therein an intermodulation signal generated by a plurality of transmission signals. Then, on the basis of the correlation value between the intermediate signal and the other of the transmission signals included in the plurality of the transmission signals, the delay measuring instrument 50 calculates the amount of delay of the other one of the transmission signals with respect to the intermodulation signal. Then, the delay measuring instrument 50 outputs the amount of delay of each of the plurality of the transmission signals calculated by the calculating unit. Consequently, the delay measuring instrument 50 according to the embodiment can promptly obtain the amount of delay of each of the transmission signals that have generated the intermodulation signal included in the reception signal while reducing an increase in the processing amount. Consequently, the communication device 10 according to the embodiment can generate the intermodulation signal having the waveform similar to that of the intermodulation signal that is included in the reception signal. Thus, the communication device 10 according to the embodiment can accurately cancel the intermodulation signal included in the reception signal and can improve the quality of the reception signal.

Furthermore, in the embodiment, the transmission signal $x_1$ and the transmission signal $x_2$ are transmitted at different frequencies. Furthermore, in the embodiment, the multiplier 500a generates the intermediate signal $S_{m1}$ by multiplying the transmission signal $x_2$ by the reception signal $r_x$. Furthermore, the multiplier 500c generates the intermediate signal $S_{m2}$ by multiplying the complex conjugate of the square of the transmission signal $x_1$ by the reception signal $r_x$. Furthermore, on the basis of the correlation value between the intermediate signal $S_{m1}$ and the square of the transmission signal $x_1$, the maximum value detecting unit 502a calculates the amount of delay $d_1$ of the transmission signal $x_1$ with respect to the intermodulation signal included in the reception signal $r_x$. Furthermore, on the basis of the correlation value between the intermediate signal $S_{m2}$ and the complex conjugate of the transmission signal $x_2$, the maximum value detecting unit 502b calculates the amount of delay $d_2$ of the transmission signal $x_2$ with respect to the intermodulation signal included in the reception signal $r_x$. Consequently, the delay measuring instrument 50 can promptly obtain the amount of delay of each of the transmission signals that generate the intermodulation signal included in the reception signal while reducing an increase in the processing load.

[b] Second Embodiment

In the first embodiment, the amount of delay of the transmission signal $x_2$ that is used when the intermediate signal $S_{m1}$ is obtained is an arbitrary value. Similarly, the amount of delay of the transmission signal $x_1$ that is used when the intermediate signal $S_{m2}$ is obtained is also an arbitrary value. Thus, in the delay measuring instrument 50 according to a second embodiment, the amount of delay of the generated intermodulation signal from the correlation between the intermodulation signal generated by using the transmission signals $x_1$ and $x_2$ and the reception signal. Then, the delay measuring instrument 50 sets the calculated amount of delay as the amount of delay of the transmission signal $x_2$ that is used when the intermediate signal $S_{m1}$ is obtained and as the amount of delay of the transmission signal $x_1$ that is used when the intermediate signal $S_{m2}$ is obtained. Consequently, the amounts of delay of the transmission signals $x_1$ and $x_2$ become the value similar to the amount of delay of the transmission signals $x_1$ and $x_2$ that generate the intermodulation signal included in the reception signal. Thus, when taking a correlation with the intermediate signal, it is possible to obtain a higher correlation value. In the following, the delay measuring instrument 50 according to the second embodiment will be described.

The delay measuring instrument 50

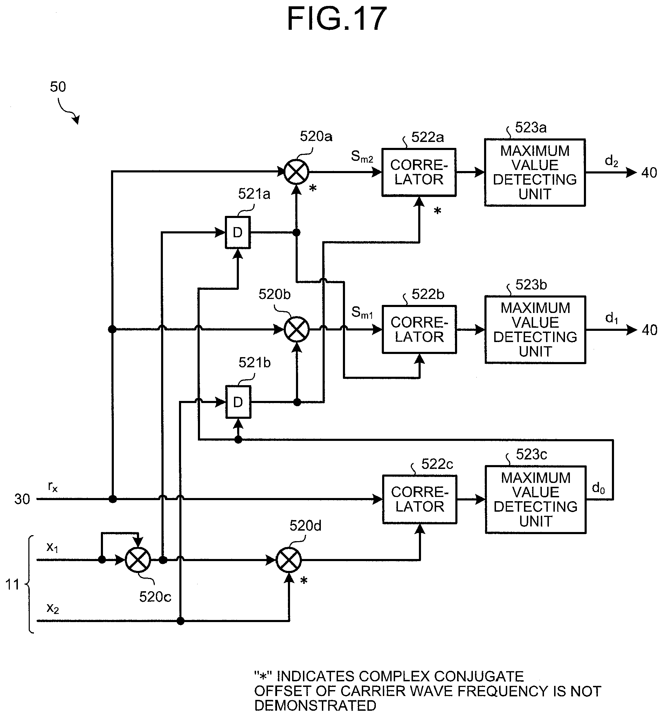

FIG. 17 is a block diagram illustrating an example of the delay measuring instrument 50 according to a second embodiment. The delay measuring instrument 50 according to the embodiment includes a plurality of multipliers 520a to 520d, a plurality of delay setting units 521a and 521b, a plurality of correlators 522a to 522c, and a plurality of maximum value detecting units 523a to 523c. The multipliers 520a to 520d are, for example, complex multipliers. For example, the sliding correlator illustrated in FIG. 6, the matched filter illustrated in FIG. 7, or the like can be used for the correlators 522a to 522c. The multiplier 520a, the multiplier 520b, and the multiplier 520d are an example of the generating unit. Furthermore, the maximum value detecting units 523a to 523c are an example of the calculating unit.

The multiplier 520c calculates the square of the transmission signal $x_1$ output from the BBU 11. The multiplier 520d generates an intermodulation signal by multiplying the square of the transmission signal $x_1$ calculated by the multiplier 520c by the complex conjugate of the transmission signal $x_2$ output from the BBU 11. The multiplier 520d is an example of a third generating unit. The intermodulation signal generated by the multiplier 520d is an example of a third intermediate signal.

The correlator 522c calculates the correlation value between the reception signal $r_x$ output from the RRE 30 and the intermodulation signal generated by the multiplier 520d while shifting the amount of delay of the intermodulation signal generated by the multiplier 520d. The maximum value detecting unit 523c detects the maximum correlation value from among the correlation values calculated by the correlator 522c. Then, the maximum value detecting unit 523c sets the amount of delay do of the detected maximum correlation value in each of the delay setting units 521a and 521b. The maximum value detecting unit 523c is an example of a third calculating unit.

The delay setting unit 521a delays the square of the transmission signal $x_1$ calculated by the multiplier 520c by the amount of delay do that has been set by the maximum value detecting unit 523c and then outputs the delayed square of the transmission signal $x_1$ to each of the multiplier 520a and the correlator 522b. The delay setting unit 521b delays the transmission signal $x_2$ output from the BBU 11 by the amount of delay do that has been set by the maximum value detecting unit 523c and then outputs the delayed transmission signal $x_2$ to each of the multiplier 520b and the correlator 522a.

The multiplier 520b calculates the intermediate signal $S_{m1}$ by multiplying the reception signal $r_x$ output from the RRE 30 by the transmission signal $x_2$ output from the delay setting unit 521b. The multiplier 520 is an example of the first generating unit. The correlator 522b calculates the correlation value between the intermediate signal $S_{m1}$ and the square of the transmission signal $x_1$ while shifting the amount of delay of the square of the transmission signal $x_1$ output from the delay setting unit 521a. The maximum value detecting unit 523b detects the maximum correlation value from among the correlation values calculated by the correlator 522b. Then, the maximum value detecting unit 523b outputs the amount of delay of the detected maximum correlation value to the replica generating unit 40 as the amount of delay $d_1$ of the transmission signal $x_1$. The maximum value detecting unit 523b is an example of the first calculating unit.

The multiplier 520a calculates the intermediate signal $S_{m2}$ by multiplying the reception signal $r_x$ output from the RRE 30 by the complex conjugate of the square of the transmission signal $x_1$ output from the delay setting unit 521a. The multiplier 520a is an example of the second generating unit. The correlator 522a calculates the correlation value between the intermediate signal $S_{m2}$ and the complex conjugate of the transmission signal $x_2$ while shifting the amount of delay of the complex conjugate of the transmission signal $x_2$ that has been output from the delay setting unit 521b. The maximum value detecting unit 523a detects the maximum correlation value from among the correlation values calculated by the correlator 522a. Then, the maximum value detecting unit 523a outputs the amount of delay of the detected maximum correlation value to the replica generating unit 40 as the amount of delay $d_2$ of the transmission signal $x_2$. The maximum value detecting unit 523a is an example of the second calculating unit.

Operation of the delay measuring instrument 50

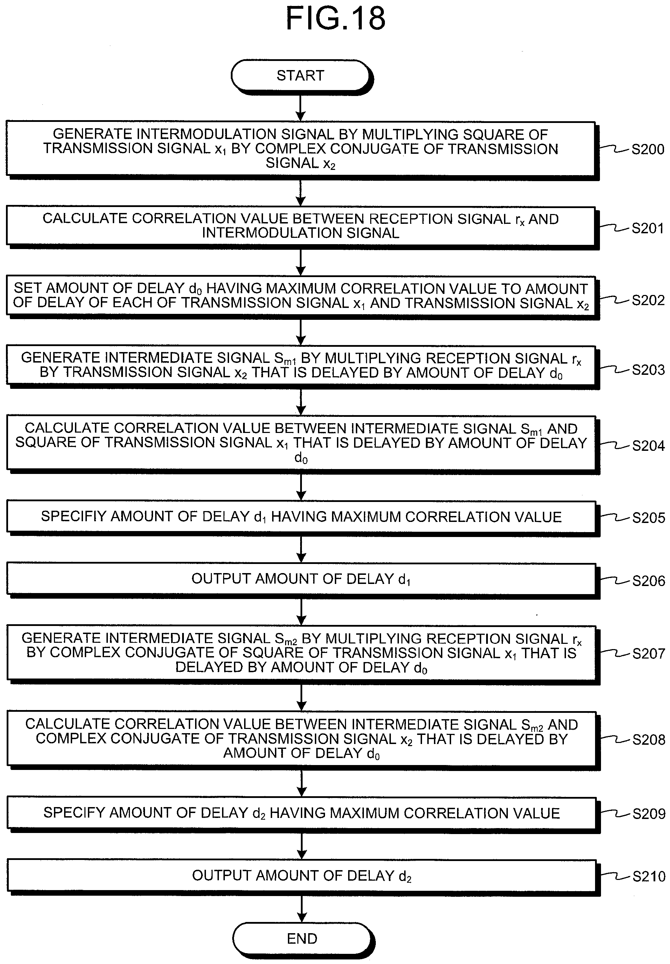

FIG. 18 is a flowchart illustrating an example of the operation of the delay measuring instrument 50 according to the second embodiment. The delay measuring instrument 50 starts the operation illustrated in FIG. 18 at predetermined timing.

First, the multiplier 520c calculates the square of the transmission signal $x_1$ output from the BBU 11. Then, the multiplier 520d generates the intermodulation signal by multiplying the square of the transmission signal $x_1$ calculated by the multiplier 520c by the complex conjugate of the transmission signal $x_2$ output from the BBU 11 (Step S200).

Then, the correlator 522c calculates the correlation value between the reception signal $r_x$ output from the RRE 30 and the intermodulation signal generated by the multiplier 520d while shifting the amount of delay of the intermodulation signal generated by the multiplier 520d (Step S201). The maximum value detecting unit 523c detects the maximum correlation value from among the correlation values calculated by the correlator 522c. Then, the maximum value detecting unit 523c sets the amount of delay do of the detected maximum correlation value in each of the delay setting units 521a and 521b (Step S202).

Then, the multiplier 520b calculates the intermediate signal $S_{m1}$ by multiplying the reception signal $r_x$ output from the RRE 30 by the transmission signal $x_2$ that is delayed by the amount of delay do by the delay setting unit 521b (Step S203). Then, the correlator 522b calculates the correlation value between the intermediate signal $S_{m1}$ and the square of the transmission signal $x_1$ while further shifting the amount of delay of the square of the transmission signal $x_1$ that is delayed by the amount of delay do by the delay setting unit 521a (Step S204). Then, the maximum value detecting unit 523b specifies the amount of delay $d_1$ having the maximum correlation value from among the correlation values calculated by the correlator 522b (Step S205). Then, the maximum value detecting unit 523b outputs the amount of delay $d_1$ to the replica generating unit 40 (Step S206).

Then, the multiplier 520a calculates the intermediate signal $S_{m2}$ by multiplying the reception signal $r_x$ output from the RRE 30 by the complex conjugate of the square of the transmission signal $x_1$ that is delayed by the amount of delay do by the delay setting unit 521a (Step S207). Then, the correlator 522a calculates the correlation value between the intermediate signal $S_{m2}$ and the complex conjugate of the transmission signal $x_2$ while shifting the amount of delay of the complex conjugate of the transmission signal $x_2$ output from the delay setting unit 521b (Step S208). The maximum value detecting unit 523a specifies the amount of delay $d_2$ having the maximum correlation value from among the correlation values calculated by the correlator 522a (Step S209). Then, the maximum value detecting unit 523a outputs the amount of delay $d_2$ to the replica generating unit 40 (Step S210).

Furthermore, in the flowchart illustrated in FIG. 18, either of the processes at Steps S203 to S206 and the processes at Steps S207 to S210 may also be performed first as long as the processes are performed after the processes at Steps S200 to S202. Furthermore, both the processes at Steps S203 to S206 and the processes at Steps S207 to S210 may also be performed in parallel after the processes at Steps S200 to S202.

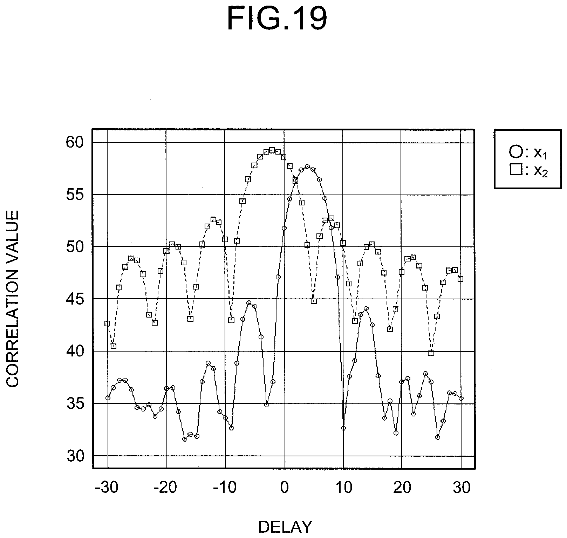

The delay profile that is calculated about each of the transmission signals by the delay measuring instrument 50 according to the embodiment is like that illustrated in, for example, FIG. 19. FIG. 19 is a schematic diagram illustrating an example of a delay profile of each of the transmission signals. In FIG. 19, the horizontal axis indicates the amount of delay of each of the transmission signals with respect to the intermodulation signal, whereas the vertical axis indicates the correlation values. Furthermore, in FIG. 19, each of the white dots indicates the correlation value between the intermediate signal $S_{m1}$ and the square of the transmission signal $x_1$, whereas each of the white squares indicates the correlation value between the intermediate signal $S_{m2}$ and the complex conjugate of the transmission signal $x_2$. Furthermore, FIG. 19 illustrates each of the correlation values with the reception signal that includes therein the intermodulation signal generated by the transmission signal $x_1$ having the amount of delay of +4 samples and the transmission signal $x_2$ having the amount of delay of -2 samples.

Another example of the delay measuring instrument 50 according to the second embodiment

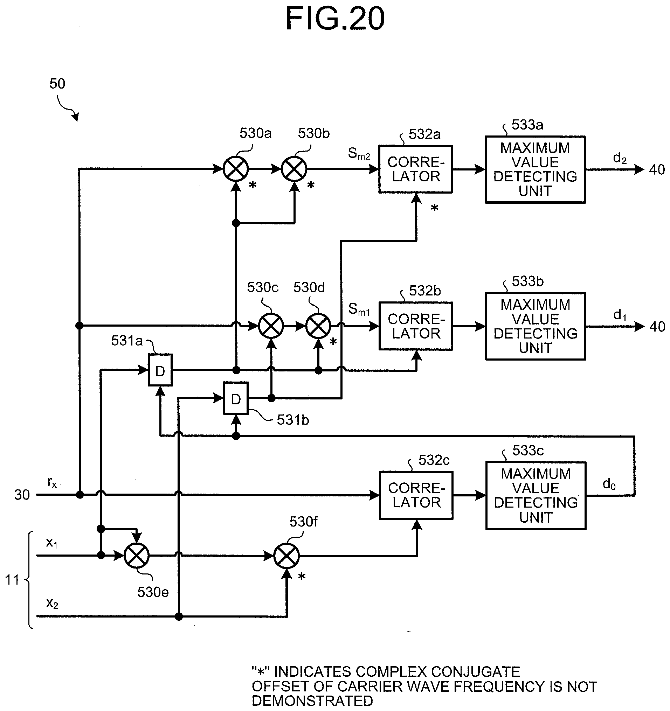

Furthermore, in also the second embodiment described above, when the amount of delay of the transmission signal $x_1$ is measured, the intermediate signal $S_{m1}$ may also be calculated by multiplying both the transmission signal $x_2$ and the complex conjugate of the transmission signal $x_1$ by the reception signal $r_x$. FIG. 20 is a block diagram illustrating another example of the delay measuring instrument 50 according to the second embodiment. Furthermore, the delay measuring instrument 50 illustrated in FIG. 20 also differs from the delay measuring instrument 50 illustrated in FIG. 17 in that, when calculating the amount of delay $d_2$ of the transmission signal $x_2$, the intermediate signal $S_{m2}$ is calculated by multiplying the complex conjugate of the transmission signal $x_1$ by the reception signal $r_x$ twice.

The delay measuring instrument 50 illustrated in FIG. 20 includes a plurality of multipliers 530a to 530f, a plurality of delay setting units 531a and 531b, a plurality of correlators 532a to 532c, and a plurality of maximum value detecting units 533a to 533c. The multipliers 530a to 530f are, for examples, complex multipliers. For example, the sliding correlator illustrated in FIG. 6, the matched filter illustrated in FIG. 7, or the like can also be used as the correlators 532a to 532c.

The multiplier 530e calculates the square of the transmission signal $x_1$ output from the BBU 11. The multiplier 530f generates an intermodulation signal by multiplying the square of the transmission signal $x_1$ calculated by the multiplier 530e by the complex conjugate of the transmission signal $x_2$ output from the BBU 11.

The correlator 532c calculates the correlation value between the reception signal $r_x$ output from the RRE 30 and the intermodulation signal generated by the multiplier 530f while shifting the amount of delay of the intermodulation signal generated by the multiplier 530f. The maximum value detecting unit 533c detects the maximum correlation value from among the correlation values calculated by the correlator 532c. Then, the maximum value detecting unit 533c sets the amount of delay do of the detected maximum correlation value in each of the delay setting units 531a and 531b.

The delay setting unit 531a delays the transmission signal $x_1$ output from the BBU 11 by the amount of delay do that has been set by the maximum value detecting unit 533c and outputs the delayed transmission signal $x_1$ to the multiplier 530a, the multiplier 530b, the multiplier 530d, and the correlator 532b. The delay setting unit 531b delays the transmission signal $x_2$ output from the BBU 11 by the amount of delay do that has been set by the maximum value detecting unit 533c and outputs the delayed transmission signal $x_2$ to the multiplier 530c and the correlator 532a.

The multiplier 530c multiplies the reception signal rx output from the RRE 30 by the transmission signal $x_2$ output from the delay setting unit 531b. The multiplier 530d calculates the intermediate signal $S_{m1}$ by multiplying the multiplication result obtained by the multiplier 530c by the complex conjugate of the transmission signal $x_1$ output from the delay setting unit 531a. The correlator 532b calculates the correlation value between the intermediate signal $S_{m1}$ and the transmission signal $x_1$ while shifting the amount of delay of the transmission signal $x_1$ output from the delay setting unit 531a. The maximum value detecting unit 533b detects the maximum correlation value from among the correlation values calculated by the correlator 532b. Then, the maximum value detecting unit 533b outputs the amount of delay of the detected maximum correlation value to the replica generating unit 40 as the amount of delay $d_1$ of the transmission signal $x_1$.

The multiplier 530a multiplies the reception signal $r_x$ output from the RRE 30 by the complex conjugate of the transmission signal $x_1$ output from the delay setting unit 531a. The multiplier 530b calculates the intermediate signal $S_{m2}$ by multiplying the multiplication result obtained by the multiplier 530a by the complex conjugate of the transmission signal $x_1$ output from the delay setting unit 531a. The correlator 532a calculates the correlation value between the intermediate signal $S_{m2}$ and the complex conjugate of the transmission signal $x_2$ while shifting the amount of delay of the complex conjugate of the transmission signal $x_2$ output from the delay setting unit 531b. The maximum value detecting unit 533a detects the maximum correlation value from among the correlation values calculated by the correlator 532a. Then, the maximum value detecting unit 533a outputs the amount of delay of the detected maximum correlation value to the replica generating unit 40 as the amount of delay $d_2$ of the transmission signal $x_2$.

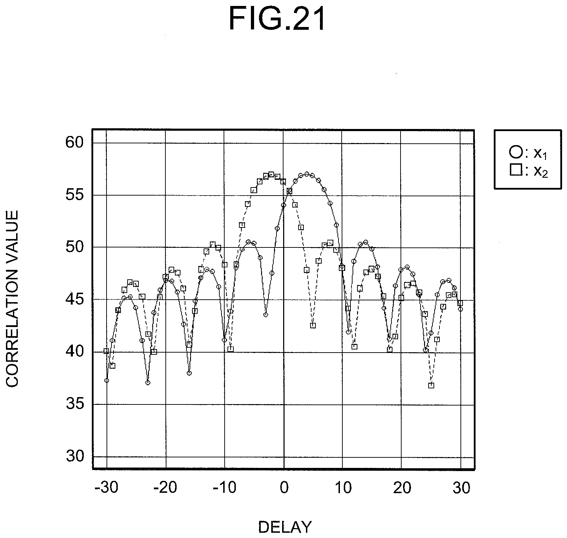

The delay profile calculated about each of the transmission signals by the delay measuring instrument 50 illustrated in FIG. 20 is like that illustrated in, for example, FIG. 21. FIG. 21 is a schematic diagram illustrating an example of a delay profile of each of the transmission signals. In FIG. 21, the horizontal axis indicates the amount of delay of each of the transmission signals with respect to the intermodulation signals, whereas the vertical axis indicates the correlation values. Furthermore, in FIG. 21, each of the white dots indicates the correlation value between the intermediate signal $S_{m1}$ and the transmission signal $x_1$, whereas each of the white squares indicates the correlation value between the intermediate signal $S_{m2}$ and the complex conjugate of the transmission signal $x_2$. Furthermore, FIG. 21 illustrates each of the correlation values with the reception signal that includes therein the intermodulation signal generated by the transmission signal $x_1$ having the amount of delay of +4 samples and the transmission signal $x_2$ having the amount of delay of -2 samples.

Effect of the second embodiment

In the above, the second embodiment has been described. In the embodiment, the multiplier 520d generates the intermodulation signal by multiplying the square of the transmission signal $x_1$ by the complex conjugate of the transmission signal $x_2$. Furthermore, the maximum value detecting unit 523c calculates, on the basis of the correlation value between the reception signal $r_x$ and the generated intermodulation signal, the amount of delay do of the generated intermodulation signal with respect to the intermodulation signal that is included in the reception signal $r_x$. The multiplier 520b generates the intermediate signal $S_{m1}$ by using the transmission signal $x_2$ that is delayed by the amount of delay

$d_0$ by the maximum value detecting unit 523c. The multiplier 520a generates the intermediate signal $S_{m2}$ by using the transmission signal $x_1$ that is delayed by the amount of delay $d_0$ calculated by the maximum value detecting unit 523c. The maximum value detecting unit 523b calculates the amount of delay $d_1$ of the transmission signal $x_1$ with respect to the intermodulation signal that is included in the reception signal $r_x$ by using the transmission signal $x_2$ that is delayed by the amount of delay $d_0$ calculated by the maximum value detecting unit 523c. The maximum value detecting unit 523a calculates the amount of delay $d_2$ of the transmission signal $x_2$ with respect to the intermodulation signal that is included in the reception signal $r_x$ by using the transmission signal $x_1$ that is delayed by the amount of delay $d_0$ calculated by the maximum value detecting unit 523c.

In this way, by measuring the amount of delay of each of the transmission signals by using each of the transmission signals in which the amount of delay of the intermodulation signal is set, it is possible to make the correlation value high when the amount of delay of the transmission signal is measured. Consequently, even if a lot of noise is included in a reception signal, it is possible to accurately measure the amount of delay of each of the transmission signals.

[c] Third Embodiment

In the first embodiment described above, when the amount of delay of one of the transmission signals is measured, the intermediate signal is generated by performing arithmetic operation on the reception signal by using the other one of the transmission signals and the amount of delay is calculated from the correlation value between the generated intermediate signal and the other one of the transmission signals. In this case, the maximum value of the correlation between the intermediate signal and one of the transmission signals becomes greater as the amount of delay of the other one of the transmission signals is more similar to the amount of delay of the transmission signal that has generated the intermediate signal that is included in the reception signal. Consequently, even if a lot of noise is included in the reception signal, it is possible to accurately measure the amount of delay of each of the transmission signals.

Thus, in the third embodiment, the process of measuring the amount of delay of one of the transmission signals and setting the measured amount of delay to the amount of delay of the one of the transmission signals that is used when the amount of delay of the other one of the transmission signals is measured is repeatedly performed. Consequently, it is possible to increase the measurement accuracy of the amount of delay of each of the transmission signals. In the following, the delay measuring instrument 50 according to the embodiment will be described.

The delay measuring instrument 50

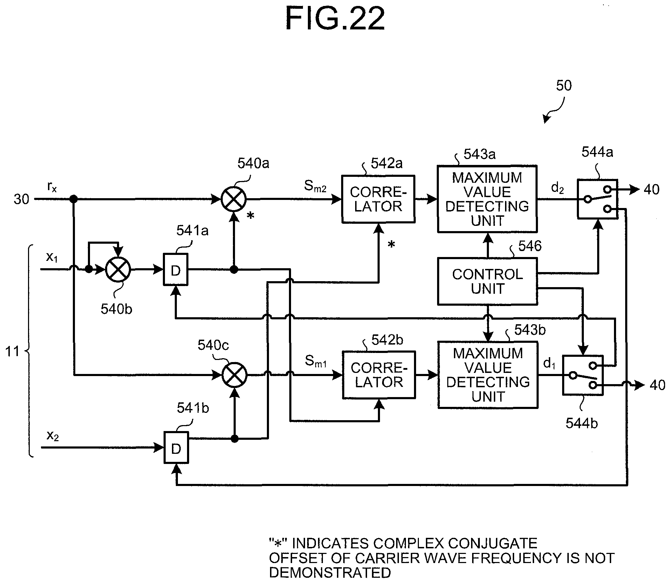

FIG. 22 is a block diagram illustrating an example of the delay measuring instrument 50 according to a third embodiment. The delay measuring instrument 50 according to the embodiment includes a plurality of multipliers 540a to 540c, a plurality of delay setting units 541a and 541b, a plurality of correlators 542a and 542b, and a plurality of maximum value detecting units 543a and 543b. Furthermore, the delay measuring instrument 50 according to the embodiment includes a plurality of selectors 544a and 544b and a control unit 546. The multipliers 540a to 540c are, for example, complex multipliers. For example, the sliding correlator illustrated in FIG. 6, the matched filter illustrated in FIG. 7, or the like can be used as the correlators 542a and 542b. The multipliers 540a and 540c are an example of the generating unit. Furthermore, the maximum value detecting units 543a and 543b are an example of the calculating unit.

The selector 544a outputs the amount of delay $d_2$ output from the maximum value detecting unit 543a to the replica generating unit 40 or the delay setting unit 541b in accordance with an instruction from the control unit 546. The selector 544b outputs the amount of delay $d_1$ output from the maximum value detecting unit 543b to the replica generating unit 40 or the delay setting unit 541a in accordance with an instruction from the control unit 546. In the measurement of the amount of delay $d_1$ and the amount of delay $d_2$, the control unit 546 controls the selector 544b such that the amount of delay $d_1$ output from the maximum value detecting unit 543b is output to the delay setting unit 541a. Furthermore, in the measurement of the amount of delay $d_1$ and the amount of delay $d_2$, the control unit 546 controls the selector 544a such that the amount of delay $d_2$ output from the maximum value detecting unit 543a is output to the delay setting unit 541b.

Then, when the measurement of the amount of delay $d_1$ and the measurement of the amount of delay $d_2$ are alternately repeated predetermined number of times, the control unit 546 controls the selector 544b such that the amount of delay $d_1$ is output to the replica generating unit 40 and controls the selector 544a such that the amount of delay $d_2$ is output to the replica generating unit 40. Furthermore, when the measurement of the amount of delay $d_1$ and the amount of delay $d_2$ is started, the control unit 546 controls the maximum value detecting units 543a and 543b such that, for example, zero is output as the initial value of the amount of delay $d_1$ and the amount of delay $d_2$.

The delay setting unit 541b delays the transmission signal $x_2$ output from the BBU 11 by the amount of delay $d_2$ output from the selector 544a and then outputs the delayed transmission signal $x_2$ to the multiplier 540c. The multiplier 540c calculates the intermediate signal $S_{m1}$ by multiplying the reception signal $r_x$ output from the RRE 30 by the transmission signal $x_2$ output from the delay setting unit 541b. The multiplier 540c is an example of the first generating unit.

The multiplier 540b calculates the square of the transmission signal $x_1$ output form the BBU 11. The delay setting unit 541a delays the square of the transmission signal $x_1$ calculated by the multiplier 540b by the amount of delay $d_1$ that is output from the selector 544b and outputs the delayed square of the transmission signal $x_1$ to both the multiplier 540a and the correlator 542b. The correlator 542b calculates the correlation value between the intermediate signal $S_{m1}$ and the square of the transmission signal $x_1$ while shifting the amount of delay of the square of the transmission signal $x_1$ output from the delay setting unit 541a. The maximum value detecting unit 543b detects the maximum correlation value from among the correlation values calculated by the correlator 542b. Then, the maximum value detecting unit 543b outputs the amount of delay of the detected maximum correlation value to the selector 544b as the amount of delay $d_1$ of the transmission signal $x_1$. The maximum value detecting unit 543b is an example of the first calculating unit.

Furthermore, the multiplier 540a calculates the intermediate signal $S_{m2}$ by multiplying the reception signal $r_x$ output form the RRE 30 by the complex conjugate of the square of the transmission signal $x_1$ output from the delay setting unit 541a. The multiplier 540a is an example of the second generating unit. The correlator 542a calculates the correlation value between the intermediate signal $S_{m2}$ and the complex conjugate of the transmission signal $x_2$ while shifting the amount of delay of the complex conjugate of the transmission signal $x_2$ output from the delay setting unit 541b. The maximum value detecting unit 543a detects the maximum correlation value from among the correlation values calculated by the correlator 542a. Then, the maximum value detecting unit 543a outputs the amount of delay of the detected maximum correlation value to the selector 544a as the amount of delay $d_2$ of the transmission signal $x_2$. The maximum value detecting unit 543a is an example of the second calculating unit.

Operation of the delay measuring instrument 50

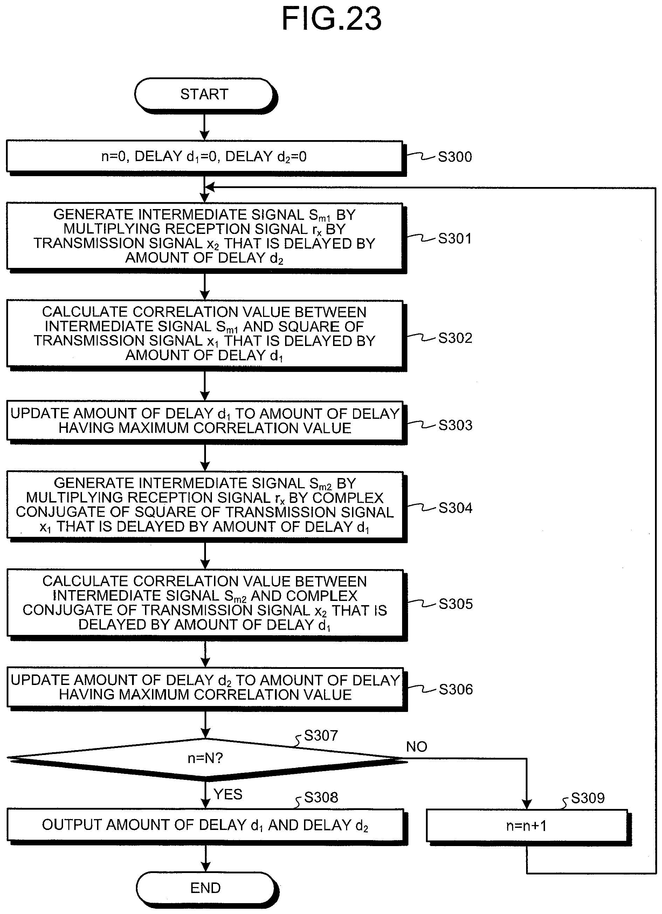

FIG. 23 is a flowchart illustrating an example of the operation of the delay measuring instrument 50 according to the third embodiment. The delay measuring instrument 50 starts the operation illustrated in FIG. 23 at the predetermined timing.

First, the control unit 546 initializes the variable n to zero (Step S300). Furthermore, the control unit 546 controls the maximum value detecting unit 543b such that, for example, zero is output as the initial value of the amount of delay $d_1$ and controls the maximum value detecting unit 543a such that, for example, zero is output as the initial value of the amount of delay $d_2$ (Step S300). Then, the control unit 546 controls the selector 544b such that the amount of delay $d_1$ output from the maximum value detecting unit 543b is to be output to the delay setting unit 541a and controls the selector 544a such that the amount of delay $d_2$ output from the maximum value detecting unit 543a is to be output to the delay setting unit 541b.

Then, the delay setting unit 541b delays the transmission signal $x_2$ output from the BBU 11 by the amount of delay $d_2$ that is output from the selector 544a. Then, the multiplier 540c generates the intermediate signal $S_{m1}$ by multiplying the reception signal $r_x$ output from the RRE 30 by the transmission signal $x_2$ that is delayed by the amount of delay $d_2$ by the delay setting unit 541b (Step S301).

Then, the multiplier 540b calculates the square of the transmission signal $x_1$ output from the BBU 11. The delay setting unit 541a delays the square of the transmission signal $x_1$ calculated by the multiplier 540b by the amount of delay $d_1$ that is output from the selector 544b. The correlator 542b calculates the correlation value between the intermediate signal $S_{m1}$ and the square of the transmission signal $x_1$ while shifting the amount of delay of the square of the transmission signal $x_1$ that is delayed by the amount of delay $d_1$ by the delay setting unit 541a (Step S302).

Then, the maximum value detecting unit 543b detects the maximum correlation value from among the correlation values calculated by the correlator 542b. Then, the maximum value detecting unit 543b updates the amount of delay $d_1$ to the amount of delay of the detected maximum correlation value (Step S303). The updated amount of delay $d_1$ is set in the delay setting unit 541a via the selector 544b.

Then, the multiplier 540a generates the intermediate signal $S_{m2}$ by multiplying the reception signal $r_x$ output from the RRE 30 by the complex conjugate of the square of the transmission signal $x_1$ that is delayed by the amount of delay $d_1$ by the delay setting unit 541a (Step S304).

The correlator 542a calculates the correlation value between the intermediate signal $S_{m2}$ and the complex conjugate of the transmission signal $x_2$ while shifting the amount of delay of the complex conjugate of the transmission signal $x_2$ output from the delay setting unit 541b (Step S305). The maximum value detecting unit 543a detects the maximum correlation value from among the correlation values calculated by the correlator 542a. Then, the maximum value detecting unit 543a updates the amount of delay $d_2$ to the amount of delay of the detected maximum correlation value (Step S306). The updated amount of delay $d_2$ is set in the delay setting unit 541b via the selector 544a.

Then, the control unit 546 determines whether the variable n reaches the predetermined value N (Step S307). In the embodiment, the predetermined value N is, for example, 3. If the variable n does not reach the predetermined value N (No at Step S307), the control unit 546 increments the value of the variable n by 1 (Step S309). Then, the process indicated by Step S301 is performed again.

In contrast, if the variable n reaches the predetermined value N (Yes at Step S307), the control unit 546 controls the selector 544b such that the amount of delay $d_1$ is output to the replica generating unit 40 and controls the selector 544a such that the amount of delay $d_2$ is output to the replica generating unit 40. Consequently, the amount of delays $d_1$ and $d_2$ measured by the delay measuring instrument 50 are output to the replica generating unit 40 (Step S308).

Furthermore, in the flowchart illustrated in FIG. 23, the processes at Steps S304 to S306 are performed after the processes at Steps S301 to S303; however, either of the processes at Steps S304 to S306 and the processes at Steps S301 to S303 may also be performed first.

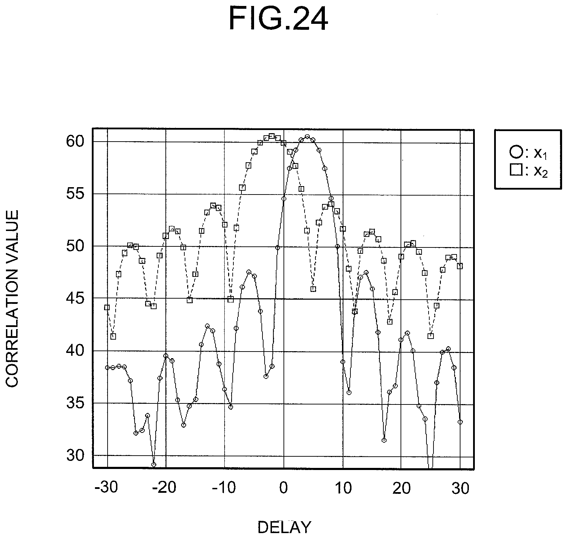

The delay profile calculated about each of the transmission signals by the delay measuring instrument 50 according to the embodiment is like that illustrated in, for example, FIG. 24. FIG. 24 is a schematic diagram illustrating an example of a delay profile of each of the transmission signals. In FIG. 24, the horizontal axis indicates the amount of delay of each of the transmission signals with respect to the intermodulation signal, whereas the vertical axis indicates the correlation values. Furthermore, in FIG. 24, each of the white dots indicates the correlation value between the intermediate signal $S_{m1}$ and the square of the transmission signal $x_1$, whereas each of the white squares indicates the correlation value between the intermediate signal $S_{m2}$ and the complex conjugate of the transmission signal $x_2$. Furthermore, FIG. 24 illustrates each of the correlation values with the reception signal that includes therein the intermodulation signal generated by the transmission signal $x_1$ having the amount of delay of +4 samples and the transmission signal $x_2$ having the amount of delay of -2 samples.

Another example of the delay measuring instrument 50 according to the third embodiment

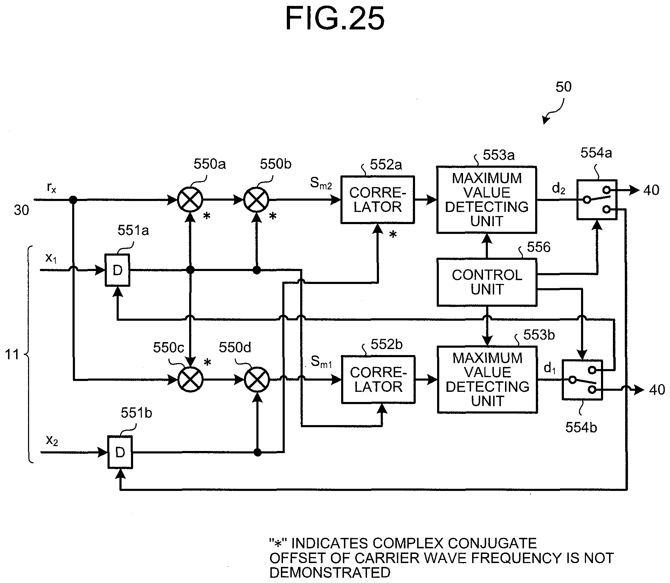

In also the third embodiment described above, when the amount of delay $d_1$ of the transmission signal $x_1$ is measured, the intermediate signal $S_{m1}$ may also be calculated by multiplying both the transmission signal $x_2$ and the complex conjugate of the transmission signal $x_1$ by the reception signal $r_x$. FIG. 25 is a block diagram illustrating another example of the delay measuring instrument 50 according to the third embodiment. The delay measuring instrument 50 illustrated in FIG. 25 also differs from the delay measuring instrument 50 illustrated in FIG. 22 in that, when calculating the amount of delay $d_2$ of the transmission signal $x_2$, the intermediate signal $S_{m2}$ is calculated by multiplying the complex conjugate of the transmission signal $x_1$ by the reception signal $r_x$ twice.

The delay measuring instrument 50 illustrated in FIG. 25 includes a plurality of multipliers 550a to 550d, a plurality of delay setting units 551a and 551b, a plurality of correlators 552a and 552b, and a plurality of maximum value detecting units 553a and 553b. Furthermore, the delay measuring instrument 50 illustrated in FIG. 25 includes a plurality of selectors 554a and 554b and a control unit 556. The multipliers 550a to 550d are, for example, complex multipliers. For example, the sliding correlator illustrated in FIG. 6, the matched filter illustrated in FIG. 7, or the like can be used as the correlators 552a and 552b.

In the measurement of the amount of delay $d_1$ and the amount of delay $d_2$, the control unit 556 controls the selector 554b such that the amount of delay $d_1$ output from the maximum value detecting unit 553b is to be output to the delay setting unit 551a. Furthermore, in the measurement of the amount of delay $d_1$ and the amount of delay $d_2$, the control unit 556 controls the selector 554a such that the amount of delay $d_2$ output from the maximum value detecting unit 553a is to be output to the delay setting unit 551b. Then, if the measurement of both the amount of delay $d_1$ and the amount of delay $d_2$ is alternately repeated predetermined number of times, the control unit 556 controls the selector 554b such that the amount of delay $d_1$ is output to the replica generating unit 40 and controls the selector 554a such that the amount of delay $d_2$ is output to the replica generating unit 40.

The delay setting unit 551b delays the transmission signal $x_2$ output from the BBU 11 by the amount of delay $d_2$ that is output from the selector 554a and then outputs the delayed transmission signal $x_2$ to the multiplier 550d and the correlator 552a. The delay setting unit 551a delays the transmission signal $x_1$ output from the BBU 11 by the amount of delay $d_1$ that is output from the selector 554b and then outputs the delayed transmission signal $x_1$ to both the multipliers 550a to 550c and the correlator 552b.

The multiplier 550c multiplies the reception signal $r_x$ output from the RRE 30 by the complex conjugate of the transmission signal $x_1$ output from the delay setting unit 551a. The multiplier 550d generates the intermediate signal $S_{m1}$ by multiplying the multiplication result obtained by the multiplier 550c by the transmission signal $x_2$ output from the delay setting unit 551b.

The correlator 552b calculates the correlation value between the intermediate signal $S_{m1}$ and the transmission signal $x_1$ while shifting the amount of delay of the transmission signal $x_1$ output from the delay setting unit 551a. The maximum value detecting unit 553b detects the maximum correlation value from among the correlation values calculated by the correlator 552b. Then, the maximum value detecting unit 553b outputs the amount of delay of the detected maximum correlation value to the selector 554b as the amount of delay $d_1$ of the transmission signal $x_1$.

The multiplier 550a multiplies the reception signal $r_x$ output from the RRE 30 by the complex conjugate of the transmission signal $x_1$ that is output from the delay setting unit 551a. The multiplier 550b generates the intermediate signal $S_{m2}$ by multiplying the multiplication result obtained by the multiplier 550a by the complex conjugate of the transmission signal $x_1$ that is output from the delay setting unit 551a.

The correlator 552a calculates the correlation value between the intermediate signal $S_{m2}$ and the complex

conjugate of the transmission signal $x_2$ while shifting the amount of delay of the complex conjugate of the transmission signal $x_2$ output from the delay setting unit 551b. The maximum value detecting unit 553a detects the maximum correlation value from among the correlation values calculated by the correlator 552a. Then, the maximum value detecting unit 553a outputs the amount of delay of the detected maximum correlation value to the selector 554a as the amount of delay $d_2$ of the transmission signal $x_2$.

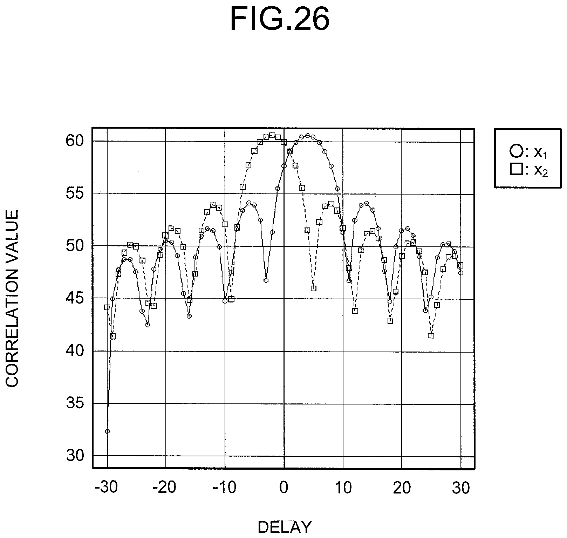

The delay profile calculated about each of the transmission signals by the delay measuring instrument 50 illustrated in FIG. 25 is like that illustrated in, for example, FIG. 26. FIG. 26 is a schematic diagram illustrating an example of a delay profile of each of the transmission signals. In FIG. 26, the horizontal axis indicates the amount of delay of each of the transmission signals with respect to the intermodulation signal, whereas the vertical axis indicates the correlation values. Furthermore, in FIG. 26, each of the white dots indicates the correlation value between the intermediate signal $S_{m1}$ and the transmission signal $x_1$, whereas each of the white squares indicates the correlation value between the intermediate signal $S_{m2}$ and the complex conjugate of the transmission signal $x_2$. Furthermore, FIG. 26 illustrates each of the correlation values with the reception signal that includes therein the intermodulation signal generated by the transmission signal $x_1$ having the amount of delay of +4 samples and the transmission signal $x_2$ having the amount of delay of -2 samples.

Effect of the third embodiment

In the above, the third embodiment has been described. In the embodiment, the multiplier 550d generates the intermediate signal $S_{m1}$ by using the transmission signal $x_2$ that is delayed by the amount of delay $d_2$ calculated by the maximum value detecting unit 553a. Furthermore, the multiplier 550b generates the intermediate signal $S_{m2}$ by using the transmission signal $x_1$ that is delayed by the amount of delay $d_1$ calculated by the maximum value detecting unit 553b. The control unit 556 repeatedly causes a predetermined number of times the multiplier 550d to generate the intermediate signal $S_{m1}$, the maximum value detecting unit 553b to calculate the amount of delay $d_1$, the multiplier 550b to generate the intermediate signal $S_{m2}$, and the maximum value detecting unit 553a to calculate the amount of delay $d_2$. Consequently, the accuracy of the measurement of the amount of delay of each of the transmission signals is improved. Consequently, even if a lot of noise is included in the reception signal, it is possible to more accurately measure the amount of delay of each of the transmission signals.

[d] Fourth Embodiment

In the first embodiment described above, the communication device 10 that cancels the intermodulation signal generated by the transmission signals $x_1$ and $x_2$ that are transmitted at two different frequencies has been described. In a fourth embodiment, canceling of the intermodulation signal generated by the transmission signals $x_1$, $x_2$, and $x_3$ that are transmitted at three different frequencies will be described. In a description below, it is assumed that the frequency of the transmission signal $x_1$ is defined as $f_1$, the frequency of the transmission signal $x_2$ is defined as $f_2$, and the frequency of the transmission signal $x_3$ is defined as $f_3$, a description will be given with the assumption of $f_1 < f_2 < f_3$. The transmission signal $x_1$ is an example of the first transmission signal, the transmission signal $x_2$ is an example of the second transmission signal, and the transmission signal $x_3$ is an example of the third transmission signal.

Regarding the intermodulation signal $S_{PIM}$ generated by the transmission signals $x_1$, $x_2$, and $x_3$, the intermodulation signal $S_{PIM}$ having the frequency of $f_1 + f_2 - f_3$ is represented by, for example, Equation (5) below.

$$S_{PIM} = (A_3 + A_{51}|x_1|^2 + A_{52}|x_2|^2 + A_{53}|x_3|^2 + \ldots) x_1 \cdot x_2 \cdot x_3^* \qquad (5)$$

If both the complex conjugate of the transmission signal $x_2$ and the transmission signal $x_3$ are multiplied by the intermodulation signal $S_{PIM}$ represented by Equation (5) above, the intermediate signal $S_{m1}$ that is the multiplication result is represented by, for example, Equation (6) below.

$$S_{m1} = S_{PIM} \cdot x_2^* \cdot x_3$$

$$= K \cdot x_1 \cdot x_2 \cdot x_3^* \cdot x_2^* \cdot x_3$$

$$= K \cdot |x_2|^2 \cdot |x_3|^2 \cdot x_1 \qquad (6)$$

where, $K=A_3+A_{51}\,|\,x_1\,|^2+A_{52}\,|x_2|^2+A_{53}|x_3|^2+....$

In Equation (6) above, the components of the transmission signals $x_2$ and $x_3$ become the real numbers and are variation in the amplitude. Thus, it is possible to take a correlation between the intermediate signal $S_{m1}$ represented by Equation (6) above and the transmission signal $x_1$. The correlation value between the intermediate signal $S_{m1}$ and the transmission signal $x_1$ is calculated with respect to the intermediate signal $S_{m1}$ represented by Equation (6) above while changing the amount of delay of the transmission signal $x_1$. Then, the amount of delay having the maximum correlation value is the amount of delay $d_1$ of the transmission signal $x_1$ that has generated the intermodulation signal $S_{PIM}$.

Furthermore, if both the complex conjugate of the transmission signal $x_1$ and the transmission signal $x_3$ are multiplied by the intermodulation signal $S_{PIM}$ represented by Equation (5) above, the intermediate signal $S_{m2}$ that is the multiplication result is represented by, for example, Equation (7) below.

$$S_{m2}=S_{PIM} \cdot x_1{}^* \cdot x_3$$

$$=K \cdot x_1 \cdot x_2 \cdot x_3{}^* \cdot x_1{}^* \cdot x_3$$

$$=K \cdot |\,x_1\,|^2 \cdot |\,x_3\,|^2 \cdot x_2 \qquad\qquad (7)$$

where, $K=A_3+A_{51}\,|\,x1\,|^2+A_{52}\,|\,x_2\,|^2+A_{53}\,|\,x_3\,|^2+....$

In Equation (7) above, the components of the transmission signals $x_1$ and $x_3$ become the real numbers and are variation in the amplitude. Thus, it is possible to take a correlation between the intermediate signal $S_{m2}$ represented by Equation (7) above and the transmission signal $x_2$. The correlation value between the intermediate signal $S_{m2}$ and the transmission signal $x_2$ is calculated with respect to the intermediate signal $S_{m2}$ represented by Equation (7) while changing the amount of delay of the transmission signal $x_2$. Then, the amount of delay having the maximum correlation value is the amount of delay $d_2$ of the transmission signal $x_2$ that has generated the intermodulation signal $S_{PIM}$.

Furthermore, if both the complex conjugate of the transmission signal $x_1$ and the complex conjugate of the transmission signal $x_2$ are multiplied by the intermodulation signal $S_{PIM}$ represented by Equation (5) above, the intermediate signal $S_{m3}$ that is the multiplication result is represented by, for example, Equation (8) below.

$$S_{m3}=S_{PIM} \cdot x_1{}^* \cdot x_2{}^*$$

$$=K \cdot x_1 \cdot x_2 \cdot x_3{}^* \cdot x_1{}^* \cdot x_2{}^*$$

$$=K \cdot |\,x_1\,|^2 \cdot |\,x_2\,|^2 \cdot x_3{}^* \qquad\qquad (8)$$

where, $K=A_3+A_{51}\,|x_1\,|^2+A_{52}\,|x_2\,|^2+A_{53}|\,x_3\,|^2+....$

In Equation (8) above, the components of the transmission signals $x_1$ and $x_2$ become the real numbers and are variation in the amplitude. Thus, it is possible to take a correlation between intermediate signal $S_{m3}$ represented by Equation (8) above and the complex conjugate of the transmission signal $x_3$. The correlation value between the intermediate signal $S_{m3}$ and the complex conjugate of the transmission signal $x_3$ is calculated with respect to the intermediate signal $S_{m3}$ represented by Equation (8) above while changing the amount of delay of the complex conjugate of the transmission signal $x_3$. Then, the amount of delay having the maximum correlation value is the amount of delay $d_3$ of the transmission signal $x_3$ that has generated the intermodulation signal $S_{PIM}$.

In the following, an example of a specific functional block of the delay measuring instrument 50 that implements the process according to the embodiment will be described.

The delay measuring instrument 50

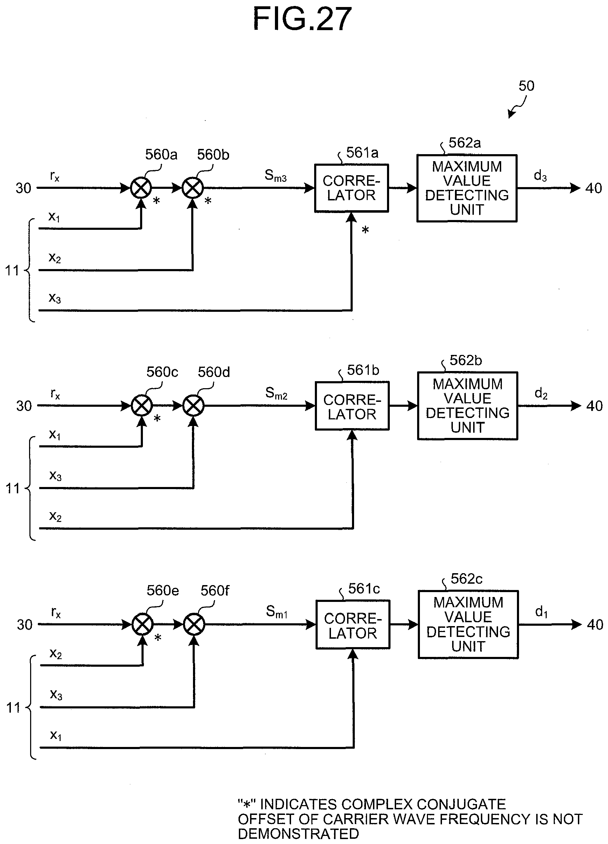

FIG. 27 is a block diagram illustrating an example of the delay measuring instrument 50 according to a fourth embodiment. The delay measuring instrument 50 according to the embodiment includes a plurality of multipliers 560a to 560f, a plurality of correlators 561a to 561c, and a plurality of maximum value detecting units 562a to 562c. The multipliers 560a to 560f are, for example, complex multipliers. Furthermore, for example, the sliding correlator illustrated in FIG. 6, the matched filter illustrated in FIG. 7, or the like can be used as the correlators 561a to 561c. The multipliers 560b, 560d, and 560f are an example of the generating unit. Furthermore, the maximum value detecting units 502a to 562c are an example of the calculating unit.

The multiplier 560a multiplies the reception signal $r_x$ output from the RRE 30 by the complex conjugate of the transmission signal $x_1$ output from the BBU 11. The multiplier 560b generates the intermediate signal $S_{m3}$ by multiplying the multiplication result obtained by the multiplier 560a by the complex conjugate of the transmission signal $x_2$ output from the BBU 11. The multiplier 560b is an example of the third generating unit.

The correlator 561a calculates the correlation value between the intermediate signal $S_{m3}$ and the complex conjugate of the transmission signal $x_3$ while shifting the amount of delay of the complex conjugate of the transmission signal $x_3$ output from the BBU 11. The maximum value detecting unit 562a detects the maximum correlation value from among the correlation values calculated by the correlator 561a. Then, the maximum value detecting unit 562a outputs the amount of delay of the detected maximum correlation value to the replica generating unit 40 as the amount of delay $d_3$ of the transmission signal $x_3$. The maximum value detecting unit 562a is an example of the third calculating unit.

The multiplier 560c multiplies the reception signal $r_x$ output from the RRE 30 by the complex conjugate of the transmission signal $x_1$ output from the BBU 11. The multiplier 560d generates the intermediate signal $S_{m2}$ by multiplying the multiplication result obtained by the multiplier 560c by the transmission signal $x_3$ output from the BBU 11. The multiplier 560d is an example of the second generating unit.

The correlator 561b calculates the correlation value between the intermediate signal $S_{m2}$ and transmission signal $x_2$ while shifting the amount of delay of the transmission signal $x_2$ output from the BBU 11. The maximum value detecting unit 562b detects the maximum correlation value from among the correlation values calculated by the correlator 561b. Then, the maximum value detecting unit 562b outputs the amount of delay of the detected maximum correlation value to the replica generating unit 40 as the amount of delay $d_2$ of the transmission signal $x_2$. The maximum value detecting unit 562b is an example of the second calculating unit.

The multiplier 560e multiplies the reception signal $r_x$ output from the RRE 30 by the complex conjugate of the transmission signal $x_2$ output from the BBU 11. The multiplier 560f generates the intermediate signal $S_{m1}$ by multiplying the multiplication result obtained by the multiplier 560e by the transmission signal $x_3$ output from the BBU 11. The multiplier 560f is an example of the first generating unit.

The correlator 561c calculates the correlation value between the intermediate signal $S_{m1}$ and transmission signal $x_1$ while shifting the amount of delay of the transmission signal $x_1$ output from the BBU 11. The maximum value detecting unit 562c detects the maximum correlation value from among the correlation values calculated by the correlator 561c. Then, the maximum value detecting unit 562c outputs the amount of delay of the detected maximum correlation value to the replica generating unit 40 as the amount of delay $d_1$ of the transmission signal $x_1$. The maximum value detecting unit 562c is an example of the first calculating unit.

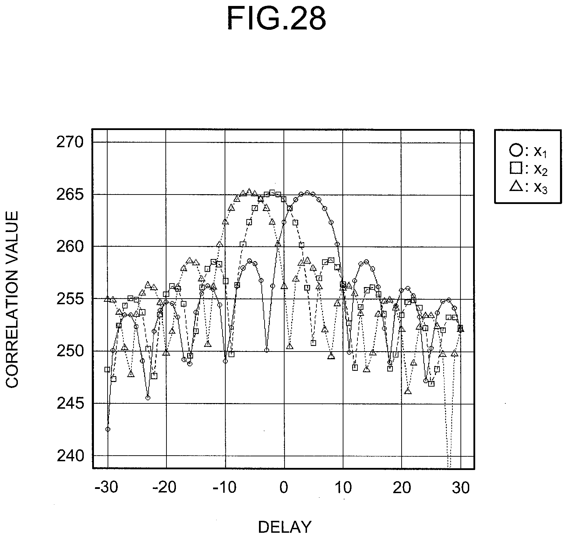

The delay profile calculates about each of the transmission signals by the delay measuring instrument 50 according to the embodiment is like that illustrated in, for example, FIG. 28. FIG. 28 is a block diagram illustrating an example of the delay profile of each of the transmission signals. In FIG. 28, the horizontal axis indicates the amount of delay of each of the transmission signals with respect to the intermodulation signal, whereas the vertical axis indicates the correlation values. Furthermore, in FIG. 28, each of the white dots indicates the correlation value between the intermediate signal $S_{m1}$ and the transmission signal $x_1$, each of the white squares indicates the correlation value between the intermediate signal $S_{m2}$ and the transmission signal $x_2$, and each of the white triangles indicates the correlation value between the intermediate signal $S_{m3}$ and the complex conjugate of the transmission signal $x_3$. Furthermore, FIG. 28 illustrates each of the correlation values with the reception signal including the intermodulation signal generated by the transmission signal $x_1$ having the amount of delay of +4 samples, the transmission signal $x_2$ having the amount of delay of -2 samples, and the transmission signal $x_3$ having the amount of delay of -6 samples.

Effect of the fourth embodiment

In the above, the fourth embodiment has been described. With the delay measuring instrument 50 according to the embodiment, in the reception signal including the intermodulation signals generated from the three transmission signals having different frequencies, it is possible to calculate the amount of delay of each of the transmission signals that has generated the intermodulation signals. Consequently, the communication device 10 according to the embodiment can generate the intermodulation signal having the waveform similar to the intermodulation signal that is included in the reception signal. Thus, the communication device 10 according to the embodiment can accurately cancel the intermodulation signals included in the reception signal and can improve the quality of the reception signal.

In also the embodiment, similarly to the second embodiment, the amount of delay of the intermodulation signals included in the reception signal may also be measured by using the intermodulation signals generated from the transmission signals $x_1$ to $x_3$ and the amount of delay of each of the transmission signals $x_1$ to $x_3$ may also be separately measured by using the measured amount of delay. Furthermore, in also the embodiment, similarly to the third embodiment, the amount of delay of the transmission signal of one of the transmission signals $x_1$ to $x_3$ may also be calculated and the calculated amount of delay may also be used to calculate the amount of delay of the other one of the transmission signals.

[e] Fifth Embodiment

In the first embodiment described above, a description has been given of canceling the intermodulation signals generated by the transmission signals $x_1$ and $x_2$ transmitted at two different frequencies. In a fifth embodiment, a description will be given of canceling the intermodulation signals generated by two sets of the transmission signals transmitted at different frequencies. In one set of the two sets of the transmission signals, the two transmission signals $x_1$ and $x_2$ that are transmitted at the same frequency are included, whereas, in the other set of the two sets of the transmission signals, the two transmission signals $x_3$ and $x_4$ that are transmitted at the same frequency are included. These intermodulation signals having the configuration described above are generated when, for example, a plurality of the RREs 30 that transmit the transmission signals at different frequencies is present and each of the RREs 30 transmits the transmission signals at the same frequency via two antennas. In a description below, the frequency of each of the transmission signals $x_1$ and $x_2$ is defined as $f_1$, the frequency of each of the transmission signals $x_3$ and $x_4$ is defined as $f_2$, and a description will be given with the assumption of $f_1<f_2$. Furthermore, the transmission signals $x_1$ to $x_4$ are uncorrelated.

The intermodulation signal $S_{PIM}$ having the frequency of $2f_1-f_2$ from among the intermodulation signals $S_{PIM}$ generated by the transmission signals $x_1$ to $x_4$ is represented by, for example, Equation (9) below.

$$S_{PIM}=K \cdot (x_1+x_2)^2 \cdot (x_3+x_4)^* \tag{9}$$

where, $K=A_3+A_{51}|x_1+x_2|^2+A_{52}|x_3+x_4|^2+....$

When the sum of the transmission signal $x_3$ and the transmission signal $x_4$ is multiplied by the intermodulation signal $S_{PIM}$ represented by Equation (9) above, the intermediate signal $S_{m1}$ that is the multiplication result is represented by, for example, Equation (10) below.

$$S_{m1}=S_{PIM} \cdot (x_3+x_4)$$

$$=K \cdot (x_1+x_2)^2 \cdot (x_3+x_4)^* \cdot (x_3+x_4)$$

$$=K \cdot |x_3+x_4|^2 \cdot (x_1+x_2)^2$$

$$=K \cdot |x_3+x_4|^2 \cdot (x_1^2+2x_1 \cdot x_2+x_2^2) \tag{10}$$

where, $K=A_3+A_{51}|x_1+x_2|^2+A_{52}|x_3+x_4|^2+....$

In Equation (10) above, the components of the transmission signals $x_3$ and $x_4$ become the real numbers and are variation in the amplitude. Furthermore, as represented by Equation (10) above, the intermediate signal $S_{m1}$ becomes the combined signal of $x_1^2$, $x_1 \cdot x_2$, and $x_2^2$. Thus, the intermediate signal $S_{m1}$ represented by Equation (10) above can correlate between $x_1^2$ and $x_2^2$. Namely, the correlation value between the intermediate signal $S_{m1}$ and $x_1^2$ is calculated with respect to the intermediate signal $S_{m1}$ represented by Equation (10) above while changing the amount of delay of the transmission signal $x_1$. Then, the amount of delay having the maximum correlation value is the amount of delay $d_1$ of the transmission signal $x_1$ that has generated the intermodulation signal $S_{PIM}$. Furthermore, the correlation value between the intermediate signal $S_{m1}$ and the $x_2^2$ is calculated with respect to the intermediate signal $S_{m1}$ represented by Equation (10) above while changing the amount of delay of the transmission signal $x_2$. Then, the amount of delay having the maximum correlation value is the amount of delay $d_2$ of the transmission signal $x_2$ that has generated the intermodulation signal $S_{PIM}$.

Furthermore, when the intermodulation signal $S_{PIM}$ represented by Equation (9) above is multiplied by the complex conjugate of the square of the sum of the transmission signal $x_1$ and the transmission signal $x_2$, the intermediate signal $S_{m2}$ that is the multiplication result is represented by, for example, Equation (11) below.

$$S_{m2} = S_{PIM} \cdot ((x_1 + x_2)^2)^*$$

$$= K \cdot (x_1 + x_2)^2 \cdot (x_3 + x_4)^* \cdot ((x_1 + x_2)^2)^*$$

$$= K \cdot |x_1 + x_2|^4 \cdot (x_3^* + x_4^*) \qquad (11)$$

where, $K = A_3 + A_{51} |x_1 + x_2|^2 + A_{52} |x_3 + x_4|^2 + \ldots$

In Equation (11) above, the components of the transmission signals $x_1$ and $x_2$ become the real numbers and are variation in the amplitude. Furthermore, as represented by Equation (11) above, intermediate signal $S_{m2}$ becomes the combined signal between the complex conjugate of the transmission signal $x_3$ and the complex conjugate of the transmission signal $x_4$. Thus, the intermediate signal $S_{m2}$ represented by Equation (11) above can correlate the complex conjugate of the transmission signal $x_3$ and the complex conjugate of the transmission signal $x_4$. Namely, the correlation value between the intermediate signal $S_{m2}$ and the complex conjugate of the transmission signal $x_3$ is calculated with respect to the intermediate signal $S_{m2}$ represented by Equation (11) above while changing the amount of delay of the transmission signal $x_3$. Then, the amount of delay having the maximum correlation value is the amount of delay $d_3$ of the transmission signal $x_3$ that has generated the intermodulation signal $S_{PIM}$. Furthermore, the correlation value between the intermediate signal $S_{m2}$ and the complex conjugate of the transmission signal $x_4$ is calculated with respect to the intermediate signal $S_{m2}$ represented by Equation (11) above while changing the amount of delay of the transmission signal $x_4$. Then, the amount of delay having the maximum correlation value is the amount of delay $d_4$ of the transmission signal $x_4$ that has generated the intermodulation signal $S_{PIM}$.

In the following, an example of a specific functional block of the delay measuring instrument 50 that implements the process according to the embodiment will be described.

The delay measuring instrument 50

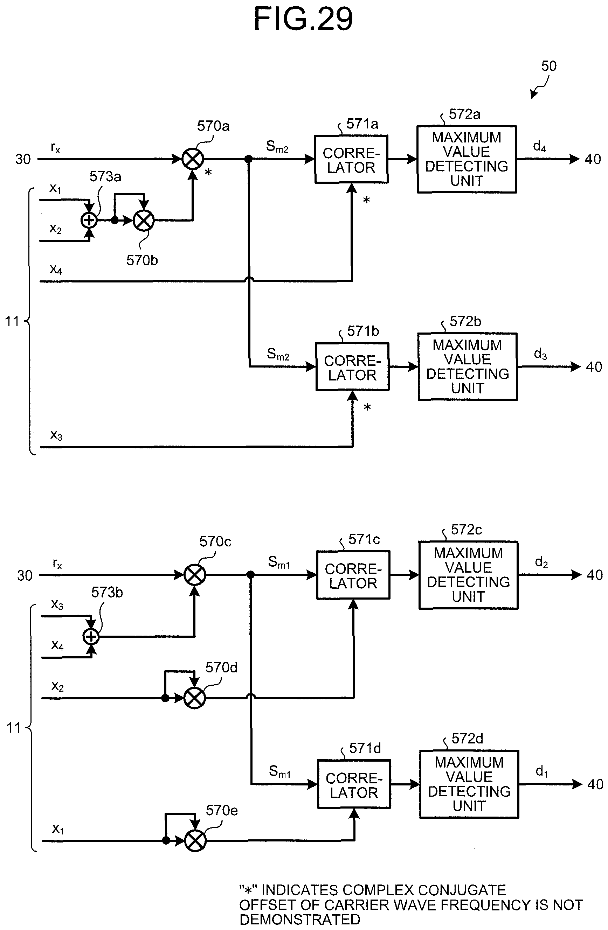

FIG. 29 is a block diagram illustrating an example of the delay measuring instrument 50 according to a fifth embodiment. The delay measuring instrument 50 according to the embodiment includes a plurality of multipliers 570a to 570e, a plurality of correlators 571a to 571d, a plurality of maximum value detecting units 572a to 572d, and a plurality of adders 573a and 573b. The multipliers 570a to 570e are, for example, complex multipliers. Furthermore, for example, the sliding correlator illustrated in FIG. 6, the matched filter illustrated in FIG. 7, or the like can be used for the correlators 571a to 571d. The multiplier 570a and the multiplier 570c are an example of the generating unit. Furthermore, the maximum value detecting units 572a to 572d are an example of calculating units.

The adder 573a adds the transmission signal $x_1$ and the transmission signal $x_2$ that are output from the BBU 11. The multiplier 570b squares the addition result obtained by the adder 573a. The multiplier 570a generates the intermediate signal $S_{m2}$ by multiplying the reception signal $r_x$ output from the RRE 30 by the complex conjugate of the multiplication result obtained by the multiplier 570b. The multiplier 570a is an example of the second generating unit.

The correlator 571a calculates the correlation value between the intermediate signal $S_{m2}$ and the complex conjugate of the transmission signal $x_4$ while shifting the amount of delay of the complex conjugate of the transmission signal $x_4$ output from the BBU 11. The maximum value detecting unit 572a detects the maximum correlation value from among the correlation values calculated by the correlator 571a. Then, the maximum value detecting unit 572a outputs the amount of delay of the detected maximum correlation value to the replica generating unit 40 as the amount of delay $d_4$ of the transmission signal $x_4$. The maximum value detecting unit 572a is an example of a fourth calculating unit.

The correlator 571b calculates the correlation value between the intermediate signal $S_{m2}$ and the complex conjugate of the transmission signal $x_3$ while shifting the amount of delay of the complex conjugate of the transmission signal $x_3$ output from the BBU 11. The maximum value detecting unit 572b detects the maximum correlation value from among the correlation values calculated by the correlator 571b. Then, the maximum value detecting unit 572b outputs the amount of delay of the detected the maximum correlation value to the replica generating unit 40 as the amount of delay $d_3$ of the transmission signal $x_3$. The maximum value detecting unit 572b is an example of the third calculating unit.

The adder 573b adds the transmission signal $x_3$ to the transmission signal $x_4$ that are output from the BBU 11. The multiplier 570c generated the intermediate signal $S_{m1}$ by multiplying the reception signal $r_x$ output from the RRE 30 by the addition result obtained by the adder 573b. The multiplier 570c is an example of the first generating unit. The multiplier 570d calculates the square of the transmission signal $x_2$ output from the BBU 11.

The correlator 571c calculates the correlation value between the intermediate signal $S_{m1}$ and the square of the transmission signal $x_2$ calculated by the multiplier 570d while shifting the amount of delay of the square of the transmission signal $x_2$ calculated by the multiplier 570d. The maximum value detecting unit 572c detects the maximum correlation value from among the correlation values calculated by the correlator 571c. Then, the maximum value detecting unit 572c outputs the amount of delay of the detected maximum correlation value to the replica generating unit 40 as the amount of delay $d_2$ of the transmission signal $x_2$. The maximum value detecting unit 572c is an example of the second calculating unit.

The multiplier 570e calculates the square of the transmission signal $x_1$ output from the BBU 11. The correlator 571d calculates the correlation value between the intermediate signal $S_{m1}$ and the square of the transmission signal $x_1$ calculated by the multiplier 570e while shifting the amount of delay of the square of the transmission signal $x_1$ calculated by the multiplier 570e. The maximum value detecting unit 572d detects the maximum correlation value from among the correlation values calculated by the correlator 571d. Then, the maximum value detecting unit 572d outputs the amount of delay of the detected maximum correlation value to the replica generating unit 40 as the amount of delay $d_1$ of the transmission signal $x_1$. The maximum value detecting unit 572d is an example of the first calculating unit.

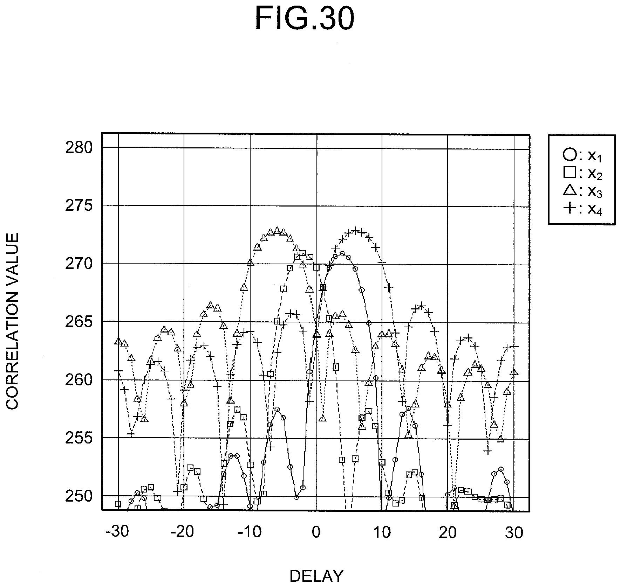

The delay profile calculated about each of the transmission signals by the delay measuring instrument 50 according to the embodiment is like that illustrated in, for example, FIG. 30. FIG. 30 is a schematic diagram illustrating an example of a delay profile of each of the transmission signals. In FIG. 30, the horizontal axis indicates the amount of delay of each of the transmission signals with respect to the intermodulation signals, whereas the vertical axis indicates the correlation values. Furthermore, in FIG. 30, each of the white dots indicates the correlation value between the intermediate signal $S_{m1}$ and the square of the transmission signal $x_1$, whereas each of the white squares indicates the correlation value between the intermediate signal $S_{m1}$ and the square of the transmission signal $x_2$. Furthermore, in FIG. 30, each of the white triangles indicates the correlation value between the intermediate signal $S_{m2}$ and the complex conjugate of the transmission signal $x_3$, whereas each of the crosses indicates the correlation value between the intermediate signal $S_{m2}$ and the complex conjugate of the transmission signal $x_4$. Furthermore, FIG. 30 illustrates each of the correlation values with the reception signal including the intermodulation signal generated by the transmission signal $x_1$ having the amount of delay of +4 samples, the transmission signal $x_2$ having the amount of delay of -2 samples, the transmission signal $x_3$ having the amount of delay of -6 samples, and the transmission signal $x_4$ having the amount of delay of +6 samples.

Another example of the delay measuring instrument 50 according to the fifth embodiment

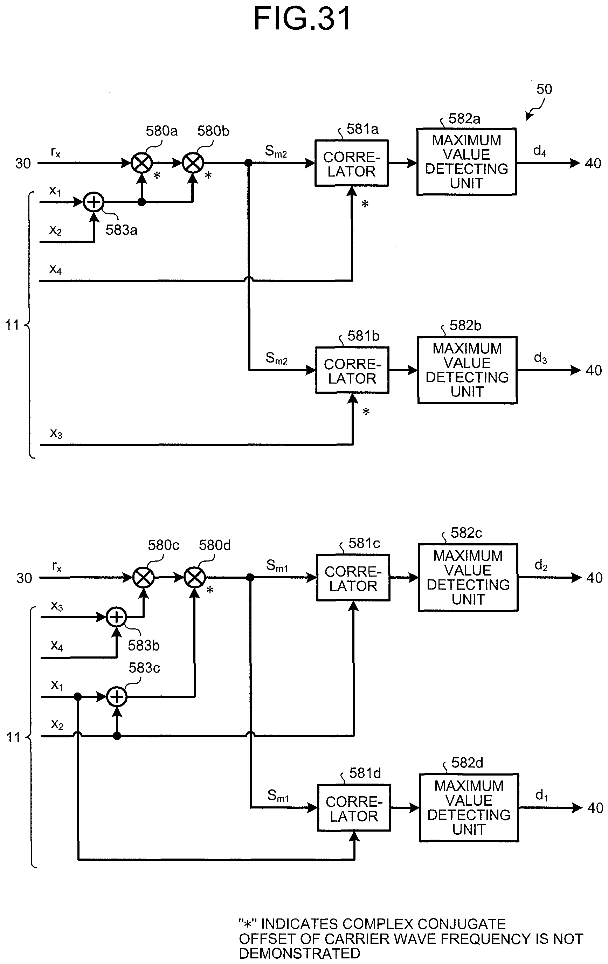

Furthermore, in the fifth embodiment described above, when the amount of delays $d_1$ and $d_2$ are measured, the intermediate signal $S_{m1}$ may also be calculated by further multiplying the reception signal $r_x$ by the complex conjugate of the sum of the transmission signal $x_1$ and the transmission signal $x_2$. FIG. 31 is a block diagram illustrating another example of the delay measuring instrument 50 according to the fifth embodiment. Furthermore, the delay measuring instrument 50 illustrated in FIG. 31 also differs from the delay measuring instrument 50 illustrated in FIG. 29 in that, when the intermediate signal $S_{m2}$ is generated, the reception signal $r_x$ is multiplied by the complex conjugate of the sum of the transmission signal $x_1$ and the transmission signal $x_2$ twice.

The delay measuring instrument 50 illustrated in FIG. 31 includes a plurality of multipliers 580a to 580d, a plurality of correlators 581a to 581d, a plurality of maximum value detecting units 582a to 582d, and a plurality of adders 583a to 583c. The multipliers 580a to 580d are, for example, complex multipliers. For example, the sliding correlator illustrated in FIG. 6, the matched filter illustrated in FIG. 7, or the like can be used for the correlators 581a to 581d.

The adder 583a adds the transmission signal $x_1$ to the transmission signal $x_2$ that are output from the BBU 11. The multiplier 580a multiplies the reception signal $r_x$ output from the RRE 30 by the complex conjugate of the addition result obtained by the adder 583a. The multiplier 580b generates the intermediate signal $S_{m2}$ by multiplying the multiplication result obtained by the multiplier 580a by the complex conjugate of the addition result obtained by the adder 583a.

The correlator 581a calculates the correlation value between the intermediate signal $S_{m2}$ and the complex conjugate of the transmission signal $x_4$ while shifting the amount of delay of the complex conjugate of the transmission signal $x_4$ output from the BBU 11. The maximum value detecting unit 582a detects the maximum correlation value from among the correlation values calculated by the correlator 581a. Then, the maximum value detecting unit 582a outputs the amount of delay of the detected maximum correlation value to the replica generating unit 40 as the amount of delay $d_4$ of the transmission signal $x_4$.

The correlator 581b calculates the correlation value between the intermediate signal $S_{m2}$ and the complex conjugate of the transmission signal $x_3$ while shifting the amount of delay of the complex conjugate of the transmission signal $x_3$ output from the BBU 11. The maximum value detecting unit 582b detects the maximum correlation value from among the correlation values calculated by the correlator 581b. Then, the maximum value detecting unit 582b outputs the amount of delay from among the detected maximum correlation value to the replica generating unit 40 as the amount of delay $d_3$ of the transmission signal $x_3$.

The adder 583b adds the transmission signal $x_3$ to the transmission signal $x_4$ that are output from the BBU 11. The multiplier 580c multiplies the reception signal $r_x$ output from the RRE 30 by the addition result obtained by the adder 583b. The adder 583c adds the transmission signal $x_1$ to the transmission signal $x_2$ that are output from the BBU 11. The multiplier 580d generates the intermediate signal $S_{m1}$ by multiplying the multiplication result obtained by the multiplier 580c by the complex conjugate of the addition result obtained by the adder 583c.

The correlator 581c calculates the correlation value between the intermediate signal $S_{m1}$ and the transmission signal $x_2$ while shifting the amount of delay of the transmission signal $x_2$ output from the BBU 11. The maximum value detecting unit 582c detects the maximum correlation value from among the correlation values calculated by the correlator 581c. Then, the maximum value detecting unit 582c outputs the amount of delay of the detected maximum correlation value to the replica generating unit 40 as the amount of delay $d_2$ of the transmission signal $x_2$.

The correlator 581d calculates the correlation value between the intermediate signal $S_{m1}$ and the transmission signal $x_1$ while shifting the amount of delay of the transmission signal $x_1$ output from the BBU 11. The maximum value detecting unit 582d detects the maximum correlation value from among the correlation values calculated by the correlator 581d. Then, the maximum value detecting unit 582d outputs the amount of delay of the detected maximum correlation value to the replica generating unit 40 as the amount of delay $d_1$ of the transmission signal $x_1$.

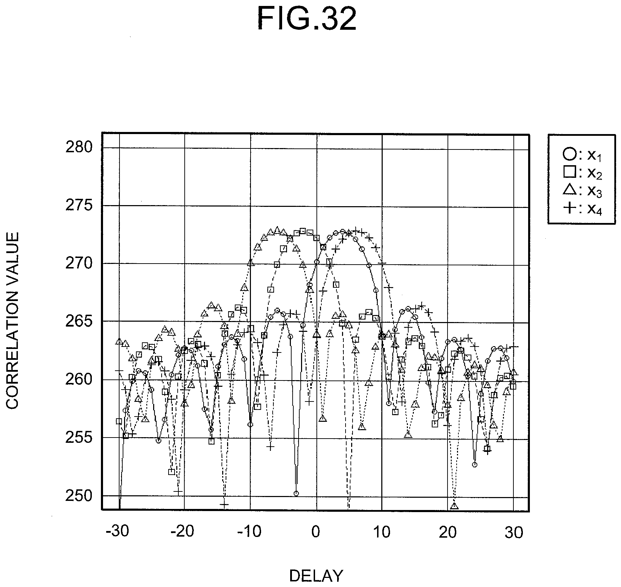

The delay profile calculated about each of the transmission signals by the delay measuring instrument 50 illustrated in FIG. 31 is like that illustrated in, for example, FIG. 32. FIG. 32 is a schematic diagram illustrating an example of a delay profile of each of the transmission signals. In FIG. 32, the horizontal axis indicates the amount of delay of each of the transmission signals with respect to the intermodulation signal, whereas the vertical axis indicates the correlation values. Furthermore, in FIG. 32, each of the white dots indicates the correlation value between the intermediate signal $S_{m1}$ and the transmission signal $x_1$, whereas each of the white squares indicates the correlation value between the intermediate signal $S_{m1}$ and the transmission signal $x_2$. Furthermore, in FIG. 32, each of the white triangles indicates the correlation value between the intermediate signal $S_{m2}$ and the complex conjugate of the transmission signal $x_3$, whereas each of the crosses indicates the correlation value between the intermediate signal $S_{m2}$ and the complex conjugate of the transmission signal $x_4$. Furthermore, FIG. 32 illustrates each of the correlation values with the reception signal including the intermodulation signal generated by the transmission signal $x_1$ having the amount of delay of +4 samples, the transmission signal $x_2$ having the amount of delay of -2 samples, the transmission signal $x_3$ having the amount of delay of -6 samples, and the transmission signal $x_4$ having the amount of delay of +6 samples.

Effect of the fifth embodiment

In the above, the fifth embodiment has been described. With the delay measuring instrument 50 according to the embodiment, in the reception signal including the intermodulation signal by two sets of the transmission signals transmitted at different frequencies, the amount of delay of each of the transmission signals that has generated the subject intermodulation signals can be calculated. Consequently, the communication device 10 according to the embodiment can generate the intermodulation signal having the waveform similar to that of the intermodulation signal included in the reception signal. Thus, the communication device 10 according to the embodiment can accurately cancel the intermodulation signal included in the reception signal and can improve the quality of the reception signal.

[f] Sixth Embodiment

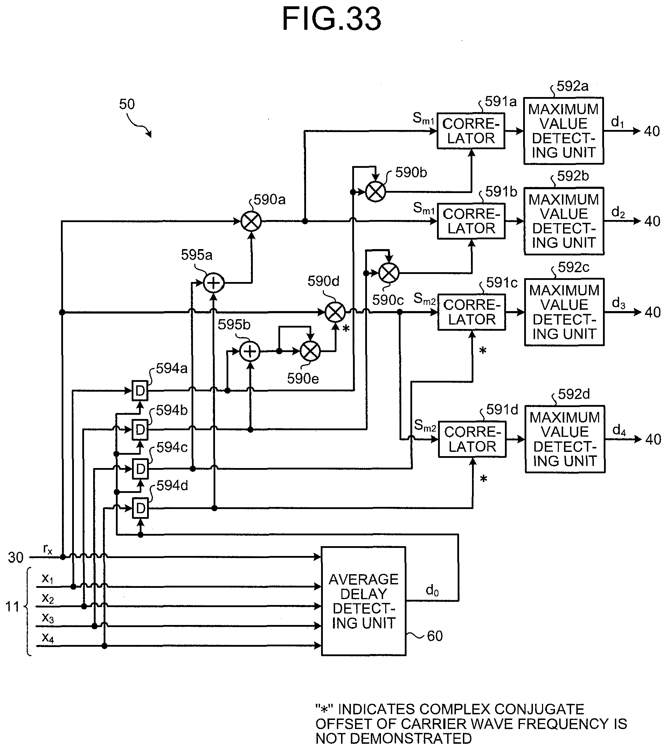

A sixth embodiment is an embodiment related to a combination of the second embodiment and the fifth embodiment. FIG. 33 is a block diagram illustrating an example of the delay measuring instrument 50 according to the sixth embodiment. The delay measuring instrument 50 according to the embodiment includes a plurality of multipliers 590a to 590e, a plurality of correlators 591a to 591d, and a plurality of maximum value detecting units 592a to 592d. Furthermore, the delay measuring instrument 50 according to the embodiment includes a plurality of delay setting units 594a to 594d, a plurality of adders 595a and 595b, and an average delay detecting unit 60. The multipliers 590a to 590e are, for example, complex multipliers. For example, the sliding correlator illustrated in FIG. 6, the matched filter illustrated in FIG. 7, or the like may also be used as the correlators 591a to 591d.

The average delay detecting unit 60 generates an intermodulation signal by using the transmission signals $x_1$ to $x_4$ output from the BBU 11. Then, on the basis of the correlation value between the reception signal $r_x$ output from the RRE 30 and the generated intermodulation signal, the average delay detecting unit 60 measures the amount of delay $d_0$ of the intermodulation signal included in the reception signal $r_x$. Then, the average delay detecting unit 60 outputs the measured amount of delay $d_0$ to the delay setting units 594a to 594d. The amount of delay $d_0$ of the intermodulation signal measured by the average delay detecting unit 60 corresponds to the average value of the amount of delays of the transmission signals $x_1$ to $x_4$ that have generated the intermodulation signal included in the reception signal $r_x$.

The delay setting unit 594a delays the transmission signal $x_1$ output from the BBU 11 by the amount of delay $d_0$ that is output from the average delay detecting unit 60. The delay setting unit 594b delays the transmission signal $x_2$ output from the BBU 11 by the amount of delay $d_0$ that is output from the average delay detecting unit 60. The delay setting unit 594c delays the transmission signal $x_3$ output from the BBU 11 by the amount of delay $d_0$ that is output from the average delay detecting unit 60. The delay setting unit 594d delays the transmission signal $x_4$ output from the BBU 11 by the amount of delay $d_0$ that is output from the average delay detecting unit 60.

The adder 595a adds the transmission signal $x_3$ that is delayed by the delay setting unit 594c to the transmission signal $x_4$ that is delayed by the delay setting unit 594d. The multiplier 590a generates the intermediate signal $S_{m1}$ by multiplying the reception signal $r_x$ output from the RRE 30 by the addition result obtained by the adder 595a. The multiplier 590b calculates the square of the transmission signal $x_1$ that is delayed by the delay setting unit 594a. The multiplier 590c calculates the square of the transmission signal $x_2$ that is delayed by the delay setting unit 594b.

The correlator 591a calculates the correlation value between the intermediate signal $S_{m1}$ and the square of the transmission signal $x_1$ while shifting the amount of delay of the square of the transmission signal $x_1$ calculated by the multiplier 590b. The maximum value detecting unit 592a detects the maximum correlation value from among the correlation values calculated by the correlator 591a. Then, the maximum value detecting unit 592a outputs the amount of delay of the detected maximum correlation value to the replica generating unit 40 as the amount of delay $d_1$ of the transmission signal $x_1$.

The correlator 591b calculates the correlation value between the intermediate signal $S_{m1}$ and the square of the transmission signal $x_2$ while shifting the amount of delay of the square of the transmission signal $x_2$ calculated by the multiplier 590c. The maximum value detecting unit 592b detects the maximum correlation value from among the correlation values calculated by the correlator 591b. Then, the maximum value detecting unit 592b outputs the amount of delay of the detected the maximum correlation value to the replica generating unit 40 as the amount of delay $d_2$ of the transmission signal $x_2$.

The adder 595b adds the transmission signal $x_1$ that is delayed by the delay setting unit 594a to the transmission signal $x_2$ that is delayed by the delay setting unit 594b. The multiplier 590e calculates the square of the addition result obtained by the adder 595b. The multiplier 590d generates the intermediate signal $S_{m2}$ by multiplying the reception signal $r_x$ output from the RRE 30 by the complex conjugate of the multiplication result obtained by the multiplier 590e.

The correlator 591c calculates the correlation value between the intermediate signal $S_{m2}$ and the complex conjugate of the transmission signal $x_3$ while shifting the amount of delay of the complex conjugate of the transmission signal $x_3$ that is delayed by the delay setting unit 594c. The maximum value detecting unit 592c detects the maximum correlation value from among the correlation values calculated by the correlator 591c. Then, the maximum value detecting unit 592c outputs the amount of delay of the detected maximum correlation value to the replica generating unit 40 as the amount of delay $d_3$ of the transmission signal $x_3$.

The correlator 591d calculates the correlation value between the intermediate signal $S_{m2}$ and the complex conjugate of the transmission signal $x_4$ while shifting the amount of delay of the complex conjugate of the transmission signal $x_4$ that is delayed by the delay setting unit 594d. The maximum value detecting unit 592d detects the maximum correlation value from among the correlation values calculated by the correlator 591d. Then, the maximum value detecting unit 592d outputs the amount of delay of the detected maximum correlation value to the replica generating unit 40 as the amount of delay $d_4$ of the transmission signal $x_4$.

The average delay detecting unit 60

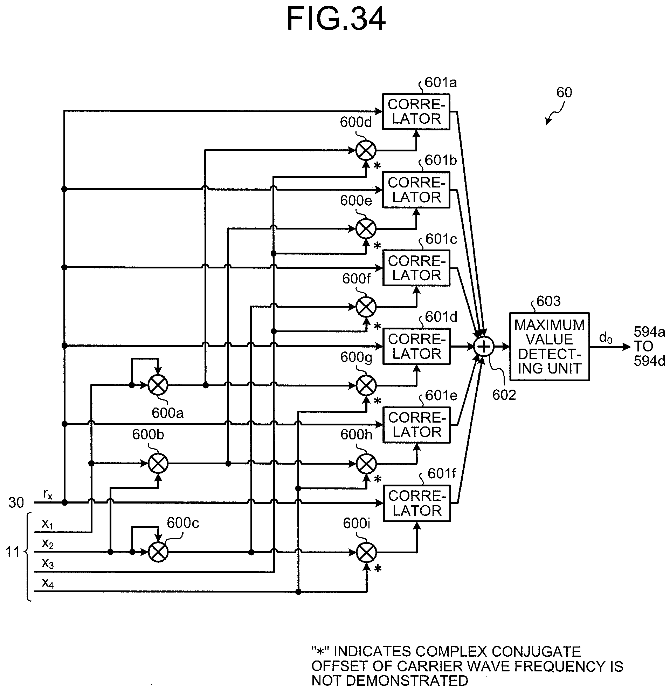

FIG. 34 is a block diagram illustrating an example of the average delay detecting unit 60. The average delay detecting unit 60 includes a plurality of multipliers 600a to 600i, a plurality of correlators 601a to 601f, an adder 602, and a maximum value detecting unit 603. The multipliers 600a to 600i are, for example complex multipliers. For example, the sliding correlator illustrated in FIG. 6, the matched filter illustrated in FIG. 7, or the like can be used for the correlators 601a to 601f.

The multiplier 600a calculates the square of the transmission signal $x_1$ output from the BBU 11. The multiplier 600b multiplies the transmission signal $x_1$ by the transmission signal $x_2$ that are output from the BBU 11. The multiplier 600c calculates the square of the transmission signal $x_2$ output from the BBU 11.

The multiplier 600d multiplies the multiplication result obtained by the multiplier 600a by the complex conjugate of the transmission signal $x_3$ output from the BBU 11. The correlator 601a calculates the correlation value between the reception signal $r_x$ output from the RRE 30 and the multiplication result obtained from the multiplier 600d while shifting the amount of delay of the multiplication result obtained by the multiplier 600d.

The multiplier 600e multiplies the multiplication result obtained by the multiplier 600b by the complex conjugate of the transmission signal $x_3$ output form the BBU 11. The correlator 601b calculates the correlation value between the reception signal $r_x$ output from the RRE 30 and the multiplication result obtained by the multiplier 600e while shifting the amount of delay of the multiplication result obtained by the multiplier 600e.

The multiplier 600f multiplies the multiplication result obtained by the multiplier 600c by the complex conjugate of the transmission signal $x_3$ that is output from the BBU 11. The correlator 601c calculates the correlation value between the reception signal $r_x$ output from the RRE 30 and the multiplication result obtained by the multiplier 600f while shifting the amount of delay of the multiplication result obtained by the multiplier 600f.

The multiplier 600g multiplies the multiplication result obtained by the multiplier 600a by the complex conjugate of the transmission signal $x_4$ obtained from the BBU 11. The correlator 601d calculates the correlation value between the reception signal $r_x$ output from the RRE 30 and the multiplication result obtained by the multiplier 600g while shifting the amount of delay of the multiplication result obtained by the multiplier 600g.

The multiplier 600h multiplies the multiplication result obtained by the multiplier 600b by the complex conjugate of the transmission signal $x_4$ output from the BBU 11. The correlator 601e calculates the correlation value between the reception signal $r_x$ output from the RRE 30 and the multiplication result obtained by the multiplier 600h while shifting the amount of delay of the multiplication result obtained by the multiplier 600h.

The multiplier 600i multiplies the multiplication result obtained by the multiplier 600c by the complex conjugate of the transmission signal $x_4$ output from the BBU 11. The correlator 601f calculates the correlation value between the reception signal $r_x$ output from the RRE 30 and the multiplication result obtained by the multiplier 600i while shifting the amount of delay of the multiplication result obtained by the multiplier 600i.

The adder 602 adds, for each amount of delay, the correlation value that is output from each of the correlators 601a to 601f. The maximum value detecting unit 603 detects the maximum correlation value from among the correlation values added by the adder 602. Then, the maximum value detecting unit 603 outputs the amount of delay of the detected maximum correlation value to each of the delay setting units 594a to 594d as the amount of delay $d_0$ of the intermodulation signal.

Another example of the delay measuring instrument 50 according to the sixth embodiment

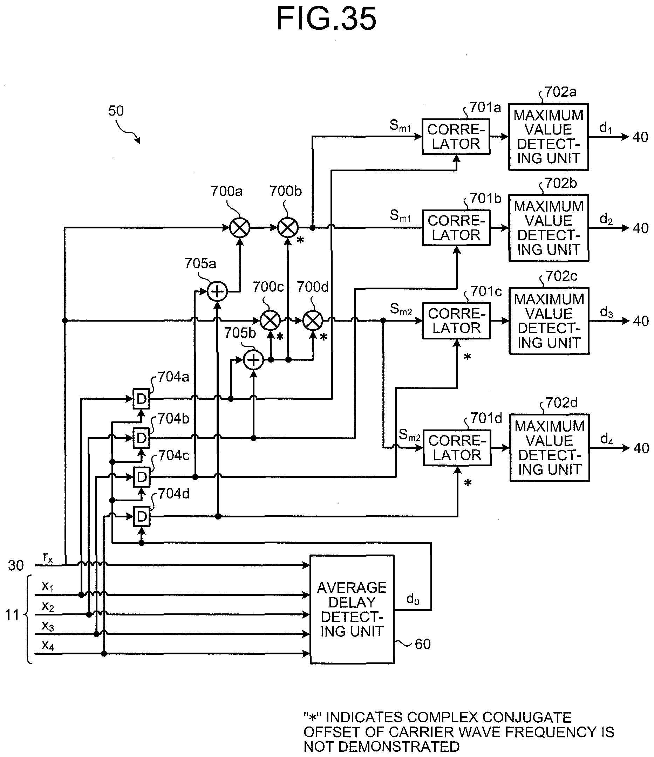

In the sixth embodiment described above, when the amount of delays $d_1$ and $d_2$ are measured, the intermediate signal $S_{m1}$ may also be calculated by further multiplying the reception signal $r_x$ by the complex conjugate of the sum of the transmission signal $x_1$ and the transmission signal $x_2$. FIG. 35 is a block diagram illustrating another example of the delay measuring instrument 50 according to the sixth embodiment. The delay measuring instrument 50 illustrated in FIG. 35 also differs from the delay measuring instrument 50 illustrated in FIG. 33 in that, when calculating the amount of delays $d_3$ and $d_4$, the intermediate signal $S_{m2}$ is calculated by multiplying the reception signal $r_x$ by the complex conjugate of the sum of the transmission signal $x_1$ and the transmission signal $x_2$ twice.

The delay measuring instrument 50 illustrated in FIG. 35 includes a plurality of multipliers 700a to 700d, a plurality of correlators 701a to 701d, and a plurality of maximum value detecting units 702a to 702d. Furthermore, the delay measuring instrument 50 illustrated in FIG. 35 includes a plurality of delay setting units 704a to 704d, a plurality of adders 705a and 705b, and the average delay detecting unit 60. The multipliers 700a to 700d are, for example, complex multipliers. For example, the sliding correlator illustrated in FIG. 6, the matched filter illustrated in FIG. 7, or the like can be used for the correlators 701a to 701d. The average delay detecting unit 60 illustrated in FIG. 35 is the same as the average delay detecting unit 60 illustrated in FIG. 34.

The delay setting unit 704a delays the transmission signal $x_1$ output from the BBU 11 by the amount of delay $d_0$ that is output from the average delay detecting unit 60. The delay setting unit 704a delays the transmission signal $x_2$ output from the BBU 11 by the amount of delay $d_0$ that is output from the average delay detecting unit 60. The delay setting unit 704c delays the transmission signal $x_3$ output from the BBU 11 by the amount of delay $d_0$ that is output from the average delay detecting unit 60. The delay setting unit 704d delays the transmission signal $x_4$ output from the BBU 11 by the amount of delay $d_0$ that is output from the average delay detecting unit 60.

The adder 705a adds the transmission signal $x_3$ that is delayed by the delay setting unit 704c to the transmission signal $x_4$ that is delayed by the delay setting unit 704d. The multiplier 700a multiplies the reception signal $r_x$ output from the RRE 30 by the addition result obtained by the adder 705a. The adder 705b adds the transmission signal $x_1$ that is delayed by the delay setting unit 704a to the transmission signal $x_2$ that is delayed by the delay setting unit 704b. The multiplier 700b generates the intermediate signal $S_{m1}$ by multiplying the multiplication result obtained by the multiplier 700a by the complex conjugate of the addition result obtained by the adder 705b.

The correlator 701a calculates the correlation value between the intermediate signal $S_{m1}$ and the transmission signal $x_1$ while shifting the amount of delay of the transmission signal $x_1$ that is delayed by the delay setting unit 704a. The maximum value detecting unit 702a detects the maximum correlation value from among the correlation values calculated by the correlator 701a. Then, the maximum value detecting unit 702a outputs the amount of delay of the detected maximum correlation value to the replica generating unit 40 as the amount of delay $d_1$ of the transmission signal $x_1$.

The correlator 701b calculates the correlation value between the intermediate signal $S_{m1}$ and the transmission signal $x_2$ while shifting the amount of delay of the transmission signal $x_2$ that is delayed by the delay setting unit 704b. The maximum value detecting unit 702b detects the maximum correlation value from among the correlation values calculated by the correlator 701b. Then, the maximum value detecting unit 702b outputs the amount of delay of the detected maximum correlation value to the replica generating unit 40 as the amount of delay $d_2$ of the transmission signal $x_2$.

The multiplier 700c multiplies the reception signal $r_x$ output from the RRE 30 by the complex conjugate of the addition result obtained by the adder 705b. The multiplier 700d generates the intermediate signal $S_{m2}$ by multiplying the multiplication result obtained by the multiplier 700c by the complex conjugate of the addition result obtained by the adder 705b.

The correlator 701c calculates the correlation value between the intermediate signal $S_{m2}$ and the complex conjugate of the transmission signal $x_3$ while shifting the amount of delay of the complex conjugate of the transmission signal $x_3$ that is delayed by the delay setting unit 704c. The maximum value detecting unit 702c detects the maximum correlation value from among the correlation values calculated by the correlator 701c. Then, the maximum value detecting unit 702c outputs the amount of delay of the detected maximum correlation value to the replica generating unit 40 as the amount of delay $d_3$ of the transmission signal $x_3$.

The correlator 701d calculates the correlation value between the intermediate signal $S_{m2}$ and the complex conjugate of the transmission signal $x_4$ while shifting the amount of delay of the complex conjugate of the transmission signal $x_4$ that is delayed by the delay setting unit 704d. The maximum value detecting unit 702d detects the maximum correlation value from among the correlation values calculated by the correlator 701d. Then, the maximum value detecting unit 702d outputs the amount of delay of the detected maximum correlation value to the replica generating unit 40 as the amount of delay $d_4$ of the transmission signal $x_4$.

Effect of the sixth embodiment

In the above, the sixth embodiment has been described. The delay measuring instrument 50 according to the embodiment measures the amount of delay of each of the transmission signals by using each of the transmission signals in which the amount of delay of the intermodulation signal is set. Consequently, it is possible to make the correlation value used when measuring the amount of delay of the transmission signal high. Thus, even if a lot of noise is included in a reception signal, it is possible to more accurately measure the amount of delay of each of the transmission signals.

Others

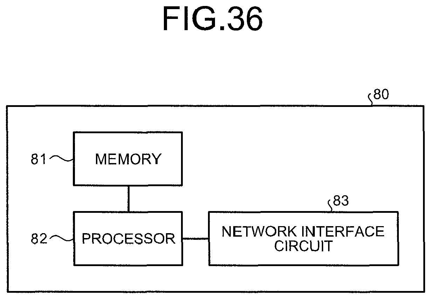

The delay measuring instrument 50 according to each of the embodiments described above is implemented by the processing unit illustrated in, for example, FIG. 36. FIG. 36 is a block diagram illustrating an example of hardware of a processing unit 80 that implements the delay measuring instrument 50. The processing unit 80 includes, for example, as illustrated in FIG. 36, a memory 81, a processor 82, and a network interface circuit 83.

The network interface circuit 83 transmits and receives a signal in accordance with, for example, the communication standard, such as the CPRI (Common Public Radio Interface), or the like. The memory 81 stores therein various kinds programs, such as programs or the like for implementing the function of the multiplier, the adder, the delay setting unit, the correlator, the maximum value detecting unit, the selector, the control unit, and the like. The processor 82 executes the programs read from the memory 81 and cooperates with the network interface circuit 83 or the like, whereby implementing each of the functions of the multiplier, the adder, the delay setting unit, the correlator, the maximum value detecting unit, the selector, the control unit, and the like.

Furthermore, in each of the embodiments described above, the delay measuring instrument 50 is provided, between the BBU 11 and the RRE 30 as a device, independently of the BBU 11 and the RRE 30; however, the disclosed technology is not limited to this. The delay measuring instrument 50 may also be provided in, for example, the BBU 11 or may also be provided in, for example, each of the RREs 30.

Furthermore, in the fifth embodiment described above, a case in which each of the RREs 30 transmits different transmission signals at the same frequency from the two antennas has been described; however, the disclosed technology is not limited to this. For example, the technology of the fifth embodiment can be used in also a case in which each of the RREs 30 transmits different transmission signals at the same frequency via three or more antennas.

According to an aspect of an embodiment, it is possible to reduce the degradation of the quality of reception signals.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A delay measuring instrument (50) comprising:

   a generating unit (500a, 500c) that generates an intermediate signal by multiplying one of transmission signals or complex conjugate of the one of the transmission signals that is included in a plurality of transmission signals that are transmitted at different frequencies by a reception signal that includes therein an intermodulation signal generated by the plurality of the transmission signals; and
   a calculating unit (502a, 502b) that calculates, based on a correlation value between the intermediate signal and other one of the transmission signals that is included in the plurality of the transmission signals, an amount of delay of the other one of the transmission signals with respect to the intermodulation signal.

2. The delay measuring instrument (50) according to claim 1, wherein
   a first transmission signal and a second transmission signal transmitted at different frequencies are included in the plurality of the transmission signals,
   the generating unit includes

   a first generating unit (500a) that generates a first intermediate signal by multiplying the second transmission signal by the reception signal, and
   a second generating unit (500c) that generates a second intermediate signal by multiplying complex conjugate of square of the first transmission signal by the reception signal, and

   the calculating unit (502a) includes

   a first calculating unit that calculates, based on a correlation value between the first intermediate signal and square of the first transmission signal, an amount of delay of the first transmission signal with respect to the intermodulation signal that is included in the reception signal, and
   a second calculating unit (502b) that calculates, based on a correlation value between the second intermediate signal and complex conjugate of the second transmission signal, an amount of delay of the second transmission signal with respect to the intermodulation signal that is included in the reception signal.

3. The delay measuring instrument (50) according to claim 2, further comprising:

   a third generating unit (520d) that generates a third intermediate signal by multiplying square of the first transmission signal by complex conjugate of the second transmission signal; and
   a third calculating unit (523c) that calculates, based on a correlation value between the reception signal and the third intermediate signal, an amount of delay of the third intermediate signal with respect to the intermodulation signal that is included in the reception signal, and wherein

   the first generating unit (520b) generates the first intermediate signal by using the second transmission signal that is delayed by the amount of delay calculated by the third calculating unit,
   the second generating unit (520a) generates the second intermediate signal by using the first transmission signal that is delayed by the amount of delay calculated by the third calculating unit,
   the first calculating unit (523b) calculates, by using the first transmission signal that is delayed by the amount of delay calculated by the third calculating unit, the amount of delay of the first transmission signal with respect to the intermodulation signal that is included in the reception signal, and
   the second calculating unit (523a) calculates, by using the second transmission signal that is delayed by the amount of delay calculated by the third calculating unit, the amount of delay of the second transmission signal with respect to the intermodulation signal that is included in the reception signal.

4. The delay measuring instrument (50) according to claim 2, wherein
   the first generating unit (540c) generates the first intermediate signal by using the second transmission signal that is delayed by the amount of delay calculated by the second calculating unit (543a), and
   the second generating unit (540a) generates the second intermediate signal by using the first transmission signal that is delayed by the amount of delay calculated by the first calculating unit (543b), wherein
   the delay measuring instrument further comprises a control unit (546) that repeatedly causes a predetermined number of times the first generating unit to generate the first intermediate signal, the first calculating unit to calculate the amount of delay of the first transmission signal, the second generating unit to generate the second intermediate

27

signal, and the second calculating unit to calculate the amount of delay of the second transmission signal.

5. The delay measuring instrument (50) according to claim 1, wherein
a first transmission signal, a second transmission signal, and a third transmission signal that are transmitted at different frequencies are included in the plurality of the transmission signals,
the generating unit includes

a first generating unit (560f) that generates a first intermediate signal by multiplying both complex conjugate of the second transmission signal and the third transmission signal by the reception signal,
a second generating unit (560d) that generates a second intermediate signal by multiplying both complex conjugate of the first transmission signal and the third transmission signal by the reception signal, and
a third generating unit (560b) that generates a third intermediate signal by multiplying both complex conjugate of the first transmission signal and complex conjugate of the second transmission signal by the reception signal, and

the calculating unit includes

a first calculating unit (562c) that calculates, based on a correlation value between the first intermediate signal and the first transmission signal, an amount of delay of the first transmission signal with respect to the intermodulation signal that is included in the reception signal,
a second calculating unit (562b) that calculates, based on a correlation value between the second intermediate signal and the second transmission signal, an amount of delay of the second transmission signal with respect to the intermodulation signal that is included in the reception signal, and
a third calculating unit (562a)that calculates, based on a correlation value between the third intermediate signal and complex conjugate of the third transmission signal, an amount of delay of the third transmission signal with respect to the intermodulation signal that is included in the reception signal.

6. The delay measuring instrument according to claim 1, wherein
two sets of transmission signals that are transmitted at different frequencies are included in the plurality of the transmission signals,
a first transmission signal and a second transmission signal that are transmitted at same frequency are included in one set of the two sets of the transmission signals,
a third transmission signal and a fourth transmission signal that are transmitted at same frequency are included in other set of the two sets of the transmission signals,
the generating unit includes

a first generating unit (570c) that generates a first intermediate signal by multiplying sum of the third transmission signal and the fourth transmission signal by the reception signal, and
a second generating unit (570a) that generates a second intermediate signal by multiplying sum of the first transmission signal and the second transmission signal by the reception signal, and

the calculating unit includes

a first calculating unit (572d) that calculates, based on a correlation value between the first intermediate signal and square of the first transmission signal, an amount of delay of the first transmission signal with respect to the intermodulation signal that is included in the reception signal,
a second calculating unit (572c) that calculates, based on a correlation value between the first intermediate signal and square of the second transmission signal, an amount of delay of the second transmission signal with respect to the intermodulation signal that is included in the reception signal,
a third calculating unit (572b) that calculates, based on a correlation value between the second intermediate signal and complex conjugate of the third transmission signal, an amount of delay of the third transmission signal with respect to the intermodulation signal that is included in the reception signal, and
a fourth calculating unit (572a) that calculates, based on a correlation value between the second intermediate signal and complex conjugate of the fourth transmission signal, an amount of delay of the fourth transmission signal with respect to the intermodulation signal that is included in the reception signal.

7. A communication device (10) comprising:

a transmission unit (31, 33, and 35) that transmits a plurality of transmission signals at different frequencies;
a receiving unit (32, 34, and 36) that receives a reception signal that includes therein an intermodulation signal generated by the plurality of the transmission signals;
a delay measuring instrument (50) that measures an amount of delay of each of the plurality of the transmission signals;
a replica generating unit (40) that generates, based on the amount of delay of each of the plurality of the transmission signals measured by the delay measuring instrument, replica of the intermodulation signal from the plurality of the transmission signals; and
a combining unit (21) that combines signal generated by the replica generating unit with the reception signal and that outputs the combined reception signal, wherein
the delay measuring instrument includes

a generating unit (500a, 500c) that generates an intermediate signal by multiplying one of the transmission signals or complex conjugate of the one of the transmission signals included in the plurality of the transmission signals by the reception signal, and
a calculating unit (502a, 502b) that calculates, based on a correlation value between the intermediate signal and other one of the transmission signals included in the plurality of the transmission signals, an amount of delay of the other one of the transmission signals with respect to the intermodulation signal.

8.  A delay measurement method comprising:

generating, performed by a delay measuring instrument (50), an intermediate signal by multiplying one of transmission signals or complex conjugate of the one of the transmission signals included in a plurality of transmission signals that are transmitted at different frequencies by a reception signal that includes therein an intermodulation signal generated by the plurality of the transmission signals;
calculating, performed by the delay measuring instrument (50), based on a correlation value between the intermediate signal and other one of the transmission signals that is included in the plurality of the transmission signals, an amount of delay of the other one of the transmission signals with respect to the intermodulation signal; and
outputting, performed by the delay measuring instrument (50), the amount of delay of each of the calculated plurality of the transmission signals.

# FIG.1

# FIG.2

# FIG.3

# FIG.4

"∗" INDICATES COMPLEX CONJUGATE
OFFSET OF CARRIER WAVE FREQUENCY IS NOT
DEMONSTRATED

# FIG.5

"*" INDICATES COMPLEX CONJUGATE
OFFSET OF CARRIER WAVE FREQUENCY IS NOT
DEMONSTRATED

# FIG.6

"*" INDICATES COMPLEX CONJUGATE

# FIG.7

"*" INDICATES COMPLEX CONJUGATE

# FIG.8

START

GENERATE INTERMEDIATE SIGNAL $S_{m1}$ BY
MULTIPLYING RECEPTION SIGNAL $r_x$ BY
TRANSMISSION SIGNAL $x_2$ — S100

CALCULATE CORRELATION VALUE BETWEEN
INTERMEDIATE SIGNAL $S_{m1}$ AND SQUARE OF
TRANSMISSION SIGNAL $x_1$ — S101

SPECIFY AMOUNT OF DELAY $d_1$ HAVING
MAXIMUM CORRELATION VALUE — S102

OUTPUT AMOUNT OF DELAY $d_1$ — S103

GENERATE INTERMEDIATE SIGNAL $S_{m2}$ BY
MULTIPLYING RECEPTION SIGNAL $r_x$ BY
COMPLEX CONJUGATE OF SQUARE OF
TRANSMISSION SIGNAL $x_1$ — S104

CALCULATE CORRELATION VALUE BETWEEN
INTERMEDIATE SIGNAL $S_{m2}$ AND COMPLEX
CONJUGATE OF TRANSMISSION SIGNAL $x_2$ — S105

SPECIFY AMOUNT OF DELAY $d_2$ HAVING
MAXIMUM CORRELATION VALUE — S106

OUTPUT AMOUNT OF DELAY $d_2$ — S107

END

# FIG.9

# FIG.10

# FIG.11

"∗" INDICATES COMPLEX CONJUGATE
OFFSET OF CARRIER WAVE FREQUENCY IS NOT
DEMONSTRATED

# FIG.12

200

201   202

203
CORRE-
LATOR

204
MAXIMUM
VALUE
DETECTING
UNIT

30   $r_x$

11   $x_1$   $x_2$

d   400

*

"∗" INDICATES COMPLEX CONJUGATE
OFFSET OF CARRIER WAVE FREQUENCY IS NOT
DEMONSTRATED

# FIG.13

CORRELATION VALUE

DELAY

# FIG.14

"*" INDICATES COMPLEX CONJUGATE
OFFSET OF CARRIER WAVE FREQUENCY IS NOT
DEMONSTRATED

# FIG.15

"*" INDICATES COMPLEX CONJUGATE
OFFSET OF CARRIER WAVE FREQUENCY IS NOT
DEMONSTRATED

# FIG.16

# FIG.17

"*" INDICATES COMPLEX CONJUGATE
OFFSET OF CARRIER WAVE FREQUENCY IS NOT
DEMONSTRATED

# FIG.18

```
                    START

GENERATE INTERMODULATION SIGNAL BY MULTIPLYING SQUARE OF
TRANSMISSION SIGNAL x₁ BY COMPLEX CONJUGATE OF TRANSMISSION     ⟿ S200
                        SIGNAL x₂

CALCULATE CORRELATION VALUE BETWEEN RECEPTION SIGNAL rₓ AND
                    INTERMODULATION SIGNAL                        ⟿ S201

SET AMOUNT OF DELAY d₀ HAVING MAXIMUM CORRELATION VALUE TO AMOUNT
OF DELAY OF EACH OF TRANSMISSION SIGNAL x₁ AND TRANSMISSION SIGNAL x₂   ⟿ S202

GENERATE INTERMEDIATE SIGNAL Sₘ₁ BY MULTIPLYING RECEPTION SIGNAL rₓ
BY TRANSMISSION SIGNAL x₂ THAT IS DELAYED BY AMOUNT OF DELAY d₀     ⟿ S203

CALCULATE CORRELATION VALUE BETWEEN INTERMEDIATE SIGNAL Sₘ₁ AND
SQUARE OF TRANSMISSION SIGNAL x₁ THAT IS DELAYED BY AMOUNT OF DELAY    ⟿ S204
                            d₀

SPECIFIY AMOUNT OF DELAY d₁ HAVING MAXIMUM CORRELATION VALUE        ⟿ S205

                OUTPUT AMOUNT OF DELAY d₁                           ⟿ S206

GENERATE INTERMEDIATE SIGNAL Sₘ₂ BY MULTIPLYING RECEPTION SIGNAL rₓ
BY COMPLEX CONJUGATE OF SQUARE OF TRANSMISSION SIGNAL x₁ THAT IS    ⟿ S207
            DELAYED BY AMOUNT OF DELAY d₀

CALCULATE CORRELATION VALUE BETWEEN INTERMEDIATE SIGNAL Sₘ₂ AND
COMPLEX CONJUGATE OF TRANSMISSION SIGNAL x₂ THAT IS DELAYED BY      ⟿ S208
                AMOUNT OF DELAY d₀

SPECIFY AMOUNT OF DELAY d₂ HAVING MAXIMUM CORRELATION VALUE         ⟿ S209

                OUTPUT AMOUNT OF DELAY d₂                           ⟿ S210

                        END
```

# FIG.19

# FIG.20

"*" INDICATES COMPLEX CONJUGATE
OFFSET OF CARRIER WAVE FREQUENCY IS NOT
DEMONSTRATED

# FIG.21

# FIG.22

"*" INDICATES COMPLEX CONJUGATE
OFFSET OF CARRIER WAVE FREQUENCY IS NOT
DEMONSTRATED

# FIG.23

START

n=0, DELAY $d_1$=0, DELAY $d_2$=0 — S300

GENERATE INTERMEDIATE SIGNAL $S_{m1}$ BY MULTIPLYING RECEPTION SIGNAL $r_x$ BY TRANSMISSION SIGNAL $x_2$ THAT IS DELAYED BY AMOUNT OF DELAY $d_2$ — S301

CALCULATE CORRELATION VALUE BETWEEN INTERMEDIATE SIGNAL $S_{m1}$ AND SQUARE OF TRANSMISSION SIGNAL $x_1$ THAT IS DELAYED BY AMOUNT OF DELAY $d_1$ — S302

UPDATE AMOUNT OF DELAY $d_1$ TO AMOUNT OF DELAY HAVING MAXIMUM CORRELATION VALUE — S303

GENERATE INTERMEDIATE SIGNAL $S_{m2}$ BY MULTIPLYING RECEPTION SIGNAL $r_x$ BY COMPLEX CONJUGATE OF SQUARE OF TRANSMISSION SIGNAL $x_1$ THAT IS DELAYED BY AMOUNT OF DELAY $d_1$ — S304

CALCULATE CORRELATION VALUE BETWEEN INTERMEDIATE SIGNAL $S_{m2}$ AND COMPLEX CONJUGATE OF TRANSMISSION SIGNAL $x_2$ THAT IS DELAYED BY AMOUNT OF DELAY $d_1$ — S305

UPDATE AMOUNT OF DELAY $d_2$ TO AMOUNT OF DELAY HAVING MAXIMUM CORRELATION VALUE — S306

S307
n=N?  NO

YES  S308

OUTPUT AMOUNT OF DELAY $d_1$ AND DELAY $d_2$

S309
n=n+1

END

# FIG.24

# FIG.25

"*" INDICATES COMPLEX CONJUGATE
OFFSET OF CARRIER WAVE FREQUENCY IS NOT
DEMONSTRATED

# FIG.26

# FIG.27

"*" INDICATES COMPLEX CONJUGATE
OFFSET OF CARRIER WAVE FREQUENCY IS NOT
DEMONSTRATED

# FIG.28

# FIG.29

"*" INDICATES COMPLEX CONJUGATE
OFFSET OF CARRIER WAVE FREQUENCY IS NOT
DEMONSTRATED

# FIG.30

# FIG.31

"∗" INDICATES COMPLEX CONJUGATE
OFFSET OF CARRIER WAVE FREQUENCY IS NOT
DEMONSTRATED

# FIG.32

# FIG.33

"*" INDICATES COMPLEX CONJUGATE
OFFSET OF CARRIER WAVE FREQUENCY IS
NOT DEMONSTRATED

# FIG.34

"*" INDICATES COMPLEX CONJUGATE
OFFSET OF CARRIER WAVE FREQUENCY IS
NOT DEMONSTRATED

# FIG.35

"*" INDICATES COMPLEX CONJUGATE
OFFSET OF CARRIER WAVE FREQUENCY IS
NOT DEMONSTRATED

# FIG.36

```
                                                    ⸝80
  ┌─────────────────────────────────────────────────┐
  │                                                  │
  │        ┌──────────────────┐                      │
  │  81⌒   │     MEMORY        │                      │
  │        │                  │                      │
  │        └──────────────────┘                      │
  │                 │                    ⸝83          │
  │        ┌──────────────────┐ ┌──────────────────┐ │
  │  82⌒   │   PROCESSOR       │─│NETWORK INTERFACE │ │
  │        │                  │ │     CIRCUIT       │ │
  │        └──────────────────┘ └──────────────────┘ │
  │                                                  │
  └─────────────────────────────────────────────────┘
```

**Europäisches Patentamt**
**European Patent Office**
**Office européen des brevets**

# EUROPEAN SEARCH REPORT

Application Number

EP 16 20 2929

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/333784 A1 (BEVAN DAVID DAMIAN NICHOLAS [GB] ET AL) 19 November 2015 (2015-11-19) * paragraphs [0003] - [0007], [0041] - [0049]; figures 1-4 * | 1-8 | INV. H04B1/12 G01R23/20 H04B17/00 H04B1/10 |
| A | US 2008/232268 A1 (KAHRIZI MASOUD [US] ET AL) 25 September 2008 (2008-09-25) * paragraphs [0022] - [0043]; figures 2-4 * | 1-8 | ADD. H04W88/08 H04W24/08 |
| A | US 2011/195672 A1 (PRATT PATRICK [IE] ET AL) 11 August 2011 (2011-08-11) * paragraphs [0112] - [0138]; figure 7 * | 1-8 | |

**TECHNICAL FIELDS SEARCHED (IPC)**

H04B
G01R
H04W

The present search report has been drawn up for all claims

| Place of search | Date of completion of the search | Examiner |
|---|---|---|
| Munich | 9 May 2017 | Reeck, Guido |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 2929

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2017

| Patent document cited in search report | Publication date | Patent family member(s) | Publication date |
|---|---|---|---|
| US 2015333784 A1 | 19-11-2015 | CN 104471862 A | 25-03-2015 |
| | | EP 2761761 A1 | 06-08-2014 |
| | | GB 2502279 A | 27-11-2013 |
| | | GB 2510997 A | 20-08-2014 |
| | | US 2013310023 A1 | 21-11-2013 |
| | | US 2013310090 A1 | 21-11-2013 |
| | | US 2015133111 A1 | 14-05-2015 |
| | | US 2015333784 A1 | 19-11-2015 |
| | | US 2016322995 A1 | 03-11-2016 |
| | | WO 2013175193 A1 | 28-11-2013 |
| US 2008232268 A1 | 25-09-2008 | EP 2127100 A1 | 02-12-2009 |
| | | KR 20090122482 A | 30-11-2009 |
| | | US 2008232268 A1 | 25-09-2008 |
| | | WO 2008116153 A1 | 25-09-2008 |
| US 2011195672 A1 | 11-08-2011 | CN 102763338 A | 31-10-2012 |
| | | CN 104660297 A | 27-05-2015 |
| | | EP 2471185 A1 | 04-07-2012 |
| | | JP 5575912 B2 | 20-08-2014 |
| | | JP 2013511858 A | 04-04-2013 |
| | | TW 201130268 A | 01-09-2011 |
| | | US 2011195672 A1 | 11-08-2011 |
| | | WO 2011097847 A1 | 18-08-2011 |

EPO FORM P0459

For more details about this annex : see Official Journal of the European Patent Office, No. 12/82

**REFERENCES CITED IN THE DESCRIPTION**

**Patent documents cited in the description**

- JP 2009526442 A

**Non-patent literature cited in the description**

- Passive Intermodulation (PIM) handling for Base Stations (BS) (Release 12). *3GPP TR37.808 v12.0.0*